(19) Europäisches Patentamt
European Patent Office
Office européen des brevets

(11) EP 4 301 160 B1

(12) **EUROPEAN PATENT SPECIFICATION**

(45) Date of publication and mention of the grant of the patent:
**21.05.2025 Bulletin 2025/21**

(21) Application number: **22710031.0**

(22) Date of filing: **01.03.2022**

(51) International Patent Classification (IPC):
***A23L 5/43*** *(2016.01)* ***C09B 61/00*** *(2006.01)*

(52) Cooperative Patent Classification (CPC):
**A23L 5/43; C09B 61/00**

(86) International application number:
**PCT/EP2022/055163**

(87) International publication number:
**WO 2022/184720 (09.09.2022 Gazette 2022/36)**

# (54) BEETROOT COMPOSITION

ROTE-BETE-ZUSAMMENSETZUNG

COMPOSITION DE BETTERAVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2021 EP 21160279**

(43) Date of publication of application:
**10.01.2024 Bulletin 2024/02**

(73) Proprietor: **GNT Group B.V.**
**5731 HR Mierlo (NL)**

(72) Inventors:
- **ZILLEKENS, Annja Maria**
  **5731 HR Mierlo (NL)**
- **VOLKERT, Marcus**
  **5731 HR Mierlo (NL)**

(74) Representative: **Algemeen Octrooi- en Merkenbureau B.V.**
**P.O. Box 645**
**5600 AP Eindhoven (NL)**

(56) References cited:
**WO-A1-98/26792**

- **BORIS NEMZER ET AL: "Betalainic and nutritional profiles of pigment-enriched red beet root (L.) dried extracts", FOOD CHEMISTRY, ELSEVIER LTD, NL, vol. 127, no. 1, 16 December 2010 (2010-12-16), pages 42 - 53, XP028361786, ISSN: 0308-8146, [retrieved on 20101223], DOI: 10.1016/J.FOODCHEM.2010.12.081**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 301 160 B1

## Description

### FIELD OF THE INVENTION

The present invention relates a novel beetroot composition comprising betalains. It can be used as a colorant in foodstuffs. The beetroot composition has a specific color hue different from known beetroot compositions. The invention also provides a process of preparing such a composition.

### BACKGROUND

There is an increasing trend in the food industry to replace synthetic colorants by colorants from natural origin, i.e. obtained from fruits or vegetables. Betalains are a class of natural colorants that provide a purple-red and yellow-orange color. Betalains are predominantly found in red beetroot, but they have also been identified in e.g. prickly pear cactus fruit and in red dragon fruit. An advantage of betalains compared to other red natural colorants based on anthocyanins, is that they are stable over a pH range from 3 to 7.

EP2393881 for instance describes a process for obtaining natural betalain colorant from red dragon fruit (red pitaya) (*Hylocereus polyrhizus*) by drying dragon fruit material in the presence of maltodextrin.

Betalains are a group of pigment compounds. They include betacyanins which are purple-red and betaxanthins which are yellow. All betalains are known to be heat sensitive. The known degradation products are orange red, yellow or colorless. Betaxanthins are more prone to degradation and color loss than betacyanins. Heating of aqueous solutions or juices of beetroot, leads to color fading and/or browning, which is undesirable.

Herbach et al. (2004), describe the impact of thermal treatment on color and pigment pattern of red beet juice by means of HPLC and LS-MS analysis. Mainly yellow compounds, especially neobetanin, were identified that are considered responsible for the orange shift of red beet juice during thermal treatment. This study shows that when beet juice is subjected to a heat treatment shifting of the color to orange-yellow occurs.

Nemzer et al. (2010) describe a chromatographic study on betalains from red beetroot and their degradation derivatives analysed by LC-DAD-ESI-MS/MS. Materials analysed are spray- air- and freeze-dried concentrates and an extract treated by chromatographic purification. The objective of this study is to characterize the betalain composition and nutritional value of a new composition and compare it to existing products.

WO98/26792 describes compositions containing betacyanins and betaxanthins extracted from antioxidant-containing fruits and vegetables and their uses. The compositions are prepared by extraction, enzymatic treatment of a beet root juice and optionally freeze or spray drying it to a powder.

In view of the higher stability of betacyanins compared to betaxanthins, currently beetroot compositions with a relatively high betacyanin content are favored, but these compositions result in purple-red color shades.

However, there is a need in industry for natural colorants which cover the whole color range and provide the desired properties to the foodstuffs they are used in, such as sufficient shelf life. Especially for applications of pH 4.5 to 7, there is a lack of red to orange-red (water soluble) pigments since natural products based on anthocyanins can appear red to orange-red at low pH, but not above pH 4.5.

### DISCLOSURE OF THE INVENTION

The present invention thus provides:
a beetroot composition comprising betalains, having the following features:

ratios of HPLC peak areas as determined with a DAD detector of:

$$HPLC\ Ratio\ 1 = \frac{\sum area_{504nm}}{\sum area_{504nm} + \sum area_{534nm}} \geq 0.25$$

and

$$HPLC\ Ratio\ 2 = \frac{area_{526nm}}{area_{526nm} + \sum area_{534nm}} \geq 0.25$$

wherein $\Sigma area_{504\text{nm}}$ is the sum of peak areas detected at 504 nm, wherein the peaks show a $\lambda_{max}$ in the UV-Vis spectrum between 502 nm and 510 nm;
$\Sigma area_{504\text{nm}}$ is the sum of peak areas detected at 534 nm, wherein the peaks show a $\lambda_{max}$ in the UV-Vis spectrum

between 532 nm and 540 nm and
*area*$_{526nm}$ is the peak area detected at 526 nm, wherein the peak shows a $\lambda_{max}$ in the UV-Vis spectrum between 522 nm and 530 nm.

The color shade of the beetroot composition of the invention is stable over a pH range from 3 to 7 and surprisingly provides a bright red color shade at a high pH based on a natural colorant.

According to a second aspect the present invention provides a process of preparing a beetroot composition.

As will be shown hereafter, the process of the invention, which comprises heating a beetroot starting composition of low moisture content, does not result in loss of color, but in a beetroot composition that has shifted in color from red-purple to a stable red to orange-red.

According to a third aspect, the present invention relates to a formulation comprising the beetroot composition of the invention.

According to a fourth aspect, the present invention relates to a foodstuff comprising the composition or formulation.

## DETAILED DESCRIPTION

<u>Composition</u>

The beetroot composition of the invention comprises betalains whereby its betalain pattern differs from those of state-of-the-art red beet concentrates. As described above, betalains are a class of pigments that are present in fruits and vegetables such as red beet. As described in Miguel (2018): Betalains are immonium derivatives of betalamic acid (4-(2-oxoethylidene)-1,2,3,4-tetrahydropyridine-2,6-dicarboxylic acid). The condensation of this structure with amines and/or their derivatives generates yellow betaxanthins (Latin: beta = beet; Greek: xanthos = yellow), whereas the condensation of betalamic acid with cyclo-dopa [cyclo-3-(3,4-dihydroxyphenylalanine)] or its glucosyl derivatives gives rise to violet betacyanins (Latin: beta = beet; Greek: kyaneos = blue).

Betacyanins include e.g. betanin, isobetanin and neobetanin. The predominant betaxanthin is vulgaxanthin.

The main structures are (from Miguel (2018):

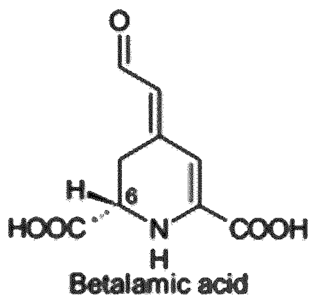

Betalamic acid

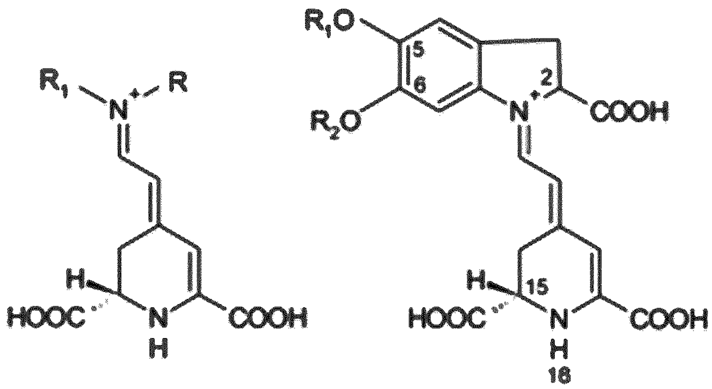

R and $R_1$: H and amines or their derivatives
Betaxanthins

$R_1$ and $R_2$: H and glucosyl derivatives
Betacyanins

According to the invention the betalains are derived from red beetroot: *Beta vulgaris ssp. vulgaris (var. Ruba).*

Depending on the starting composition, as will be shown in the process for preparing the beetroot composition, the beetroot composition may comprise from 0.1 to 20 wt.% betalains, e.g. from 0.5 to 10 wt.% betalains.

HPLC chromatograms

As described above, the beetroot composition is characterized by ratios of peak areas in its HPLC chromatogram which differ from those found in state-of-the-art red beet concentrate.

The method to determine the HPLC chromatogram is described in "Method HPLC" hereafter. In particular, the HPLC method is carried out with a C18 column with mobile phases of 0.2% (v/v) formic acid in water (eluent A) and acetonitrile (Eluent B) and a gradient program: 2% B to 17% B (40.0 min), followed by a washing step of 70% eluent B and re-equilibration of the column at 2% B for 10 min.

Figure 1 shows the HPLC chromatograms at 504, 526 and 534 nm, determined with Method HPLC for a beetroot composition according to the state of the art.

Figure 2 shows the HPLC chromatograms at 504, 526 and 534 nm, determined with Method HPLC for a beetroot concentrate of Example 1 of the invention.

Thus, $\Sigma area_{504\text{nm}}$ is the sum of the areas of peaks 2 and 4 detected at 504 nm, wherein peaks 2 and 4 show a $\lambda_{max}$ in the UV-Vis spectrum between 502 nm and 510 nm. $\Sigma area_{504\text{nm}}$ is the sum of areas of peaks 1 and 3 detected at 534 nm, wherein peaks 1 and 3 show a $\lambda_{max}$ in the UV-Vis spectrum between 532 nm and 540 nm and $area_{526nm}$ is the area of peak 5 detected at 526 nm, wherein peak 5 shows a $\lambda_{max}$ in the UV-Vis spectrum between 522 nm and 530 nm.

For a beetroot composition according to the state of the art peaks 1 and 3 are the predominant peaks in the orange-to-red-and-purple domain of the absorption spectrum of around 505 to 540 nm (see Figure 1). For the beetroot composition of the invention peaks 2,4 and 5 are predominant in the same measurement (see Figure 2).

Peaks 1 and 3 are tentatively identified as betanin and isobetanin, respectively. Peaks 2, 4 and 5 are tentatively assigned to monodecarboxylated (iso)betanins, which was confirmed by mass spectrometry.

In Table 1, peaks 1-5 are described by retention times and $\lambda_{max}$ given by HPLC, as well as by molecular formula and by mass of compounds expressed as mass per load ratio m/z of protonated precursor ion and fragmented ion given by mass spectrometry and $MS^2$ experiments, respectively. From these characteristics and by comparison with literature the compounds behind the peaks were proposed as shown in Table 1 (Herbach 2004; Nemzer et al. 2010; Wybraniec, 2005).

Table 1 Characteristics of HPLC peaks 1-5

| Peak No | Retention time [min] | HPLC DAD $\lambda_{max}$ [nm] | molecular formula | HPLC-ESI (+) $[M+H]^+$ m/z | HPLC-ESI (+)-$MS^2$ m/z | proposed compound |
|---|---|---|---|---|---|---|
| **1** | 21.8 | 534 | $C_{24}H_{26}N_2O_{13}$ | 551 | [551]:389 | Betanin |
| **2** | 23.9 | 504 | $C_{23}H_{26}N_2O_{11}$ | 507 | [507]:345 | 17-decarboxybetanin |
| **3** | 25.1 | 534 | $C_{24}H_{26}N_2O_{13}$ | 551 | [551]:389 | isobetanin |
| **4** | 27.2 | 504 | $C_{23}H_{26}N_2O_{11}$ | 507 | [507]:345 | 17-decarboxy-isobetanin |
| **5** | 27.8 | 526 | $C_{23}H_{26}N_2O_{11}$ | 507 | [507]:345 | 15-decarboxybetanin |

In the above, more than the exact retention time, the order of elution using a C18 column is relevant and thus the order of retention times RT in the chromatogram: $RT_{Peak1} < RT_{Peak2} < RT_{Peak3} < RT_{Peak4} < RT_{Peak5}$.

For comparative examples and starting materials, the HPLC peaks 2, 4 and 5 detected at 504 nm and 526 nm do not always exist. Then their area is 0 mAUs. For the beetroot composition of the invention, the HPLC peaks 1 and 3 do not always exist anymore. Then their area is 0 mAUs. Conclusively the maximum value for HPLC Ratio 1 and HPLC Ratio 2 is 1. The higher the ratios the higher the area of peaks 2, 4 and 5 compared to peaks 1 and 3.

Preferably, HPLC Ratio 1 is more than 0.3, more preferably more than 0.5, even more preferably more than 0.7. Preferably, HPLC Ratio 2 is more than 0.3, preferably more than 0.5, even more preferably more than 0.7.

Without wishing to be bound by any theory, it is assumed that during the process of heating at low moisture, as described in the process of the invention hereafter, predominantly the reactions happen as shown in Figure 3 (modified from Herbach 2004). During heating of aqueous systems on the other hand the reactions can be observed as shown in Figure 4 (modified from Herbach 2004). The proposed mechanism would explain the more orange red color shade of the invention compared to the purple-red color shade of a usual beetroot concentrate which fades or turns yellowish when exposed to heat in the presence of water.

Color and $\lambda_{max}$

The beetroot composition of the invention is characterized by a color that differs from the purple-red color of

untreated red beet. It is also different from the yellow-orange color that occurs when beet juice is exposed to heat.

In particular, the color of the present beetroot composition is characterized by a $\lambda_{max}$ which is the wavelength position of the absorption peak of between 495 and 524 nm, preferably of between 504 and 520 nm as measured in aqueous buffer at pH 6. Further details on determining $\lambda_{max}$ are included in the "Method $\lambda_{max}$".

Color shade by L*C*h

The beetroot composition of the invention is characterized by a hue angle from 5 to 55, preferably 8 to 35. Furthermore, L* is from 50 to 90 and C* is from 40 to 100.

The color hue of the present beetroot composition is determined using a spectrophotometer according to the CIELAB and CIELCH color models. In this methodology, colorimeter measurements provide a numerical representation of color based upon Opponent Color Theory where CIELAB L*a*b*C*h values are calculated from the spectral data.

The color hue is determined using a spectrophotometer and CIE L*C*h values are calculated from the absorption curve from 400 to 700 nm under illuminant C and 2° standard observer. Colorimeter measurements provide a numerical representation of color based upon CIE L*a*b* color space where L*C*h uses cylindrical coordinates.

L*: Light vs. Dark where a low number (0-50) indicates Dark and a high number (51-100) indicates Light.
**a*:** Red vs. Green where a positive number indicates Red and a negative number indicates Green.
**b*:** Yellow vs. Blue where a positive number indicates Yellow and a negative number indicates Blue.
**C*** : describes chroma, starting from the center - 0 - and increases according to the distance from the center. C* provides a scale from achromatic, i.e., neutral white, gray, or black, at the L* axis (0 C* units) to greater purity of hue as the coordinate moves away from the L* axis (up to 100 or more C* units).
h: describes the hue as an angle expressed in degrees, starting from 0° at the a* axis (red), 90° +b* (yellow), 180° -a* (green) and 270° -b* (blue).

For the L*C*h measurement the absorption curve from 400 to 700 nm is used at which the sample is diluted in pH6 to a maximum absorption (corrected by turbidity, expressed as absorption at 750 nm) of 1.0 ($A_{max}$ - $A_{750}$ = 1) and L*C*h values are calculated thereof. pH 6 is obtained by using a buffer of pH 6, e.g. citric acid buffer. Color values are calculated in C2 color space.

An example of an absorption spectrum used for color calculation is shown for Example 1 in Figure 5. This spectrum was measured with a spectrophotometer Lambda 25 by Perkin Elmer using software UV WinLab. From the measured spectrum, with an absorption of $A_{max}$ - $A_{750}$ = 1, L*C*h values were calculated with the help of the software OptLab-SPX for 400-700nm in C2 color space.

Stability upon heating and storage

A further feature of the beetroot composition of the invention is the stability upon heating and storage. When a buffered aqueous solution of the beetroot composition at pH 6 and a color intensity of 1 is exposed to 85 °C for 3 minutes, the color retention is more than 85%. When a buffered aqueous solution of the beetroot composition at pH 3 and at a color intensity of 1 is exposed to 85 °C for 3 minutes, the color retention is more than 60%.

Methods for determining color retention and color intensity are shown hereafter (s. method "Determining Color retention").

Furthermore, the color shade is stable in the pH range of 3 to 7 as determined visually and by reviewing the hue angle h. The maximum difference in hue angle in the range from pH 3 to pH 7 should not be more than 10, preferably not more than 7. The difference in hue angle ΔH* is defined by:

$$\Delta H^* = \sqrt{(\Delta a^*)^2 + (\Delta b^*)^2 - (\Delta C^*)^2}$$

Formulations and Food products

As such, the beetroot composition of the invention has a moisture content of less than 15 wt.%, preferably less than 10 wt.%, more preferably less than 7 wt.%, most preferably less than 5 wt.%. Moisture content can be determined according to "Method Moisture Content" as shown later.

The present invention relates also to formulations comprising 5 to 70 wt.%, based on the weight of the formulation, of the beetroot composition of the invention and a carrier or solvent. These can be powders or liquids.

According to a preferred embodiment, the beetroot composition of the invention further contains 0-95 wt.%, preferably 30-80 wt.% of a carrier. The carrier may be selected from carriers commonly known in the art, such as

maltodextrin, gum acacia, glucose syrups, inulin, starch, whey protein isolate. Preferably the carrier is maltodextrin e.g. with a dextrose equivalent DE from 2 to 20.

One embodiment is a liquid formulation comprising the beetroot composition of the invention and a solvent such as water, ethanol, oil and mixtures thereof, in particular an aqueous solution. The invention also includes sugar syrups comprising the beetroot composition of the invention. In general, the amount of the beetroot composition in a liquid formulation is from 5 to 70 wt.% based on the weight of the liquid formulation.

Another embodiment is a beetroot composition that is ground or milled to a fine powder.

The beetroot composition can also be combined with other pigments such as safflomin (safflower), anthocyanins, carotenoids, bixin (annatto), curcumin and chlorophyll. In the case of a mixture with other pigments, the beetroot composition will have a different $\lambda_{max}$ and L*C*h values, but the HPLC parameters obtained from the beetroot composition will still apply.

The invention also relates to foodstuffs comprising the beetroot composition or formulation of the invention, such as beverages, dairy products, chocolate products, savoury products (such as snacks) and confectionary. In general, the amount of the beetroot composition in a foodstuff is from 0.01 to 15 wt.% based on the weight of the foodstuff.

## Process

According to a second aspect, the present invention provides a process of preparing a beetroot composition comprising betalains having the following features:

a moisture content of less than 15 wt.%, based on the weight of the beetroot composition and
a ratio of HPLC peak areas as determined with a DAD detector of:

$$HPLC\ Ratio\ 1 = \frac{\sum area_{504nm}}{\sum area_{504nm} + \sum area_{534nm}} \geq 0.25$$

and

$$HPLC\ Ratio\ 2 = \frac{area_{526nm}}{area_{526nm} + \sum area_{534nm}} \geq 0.25$$

wherein $\Sigma area_{504\text{nm}}$ is the sum of peak areas detected at 504 nm, wherein the peaks show a $\lambda_{max}$ in the UV-Vis spectrum between 502 nm and 510 nm;
$\Sigma area_{504\text{nm}}$ is the sum of peak areas detected at 534 nm, wherein the peaks show a $\lambda_{max}$ in the UV-Vis spectrum between 532 nm and 540 nm and
$area_{526nm}$ is the peak area detected at 526 nm, wherein the peak shows a $\lambda_{max}$ in the UV-Vis spectrum between 522 nm and 530 nm,

wherein the process comprises the steps of:

providing a beetroot starting composition comprising betalains having a moisture content of less than 15 wt.% based on the weight of the beetroot starting composition; and
ratios of HPLC peak areas as determined with a DAD detector of:

$$HPLC\ Ratio\ 1 = \frac{\sum area_{504nm}}{\sum area_{504nm} + \sum area_{534nm}} < 0.25$$

and/or

$$HPLC\ Ratio\ 2 = \frac{area_{526nm}}{area_{526nm} + \sum area_{534nm}} < 0.25$$

heating the beetroot starting composition to a temperature of from 65 to 220 °C.

Further detail on the determination of the HPLC ratios is given above by reference to Figures 1 and 2.

The process of the invention is suitable for a starting composition that either fulfils the criterion for HPLC Ratio 1 or

HPLC Ratio 2 or both. Preferably, a starting material is used that has both a HPLC Ratio 1 < 0.2 and a HPLC Ratio 2 < 0.15.

The beetroot starting composition is preferably further characterized by one or both of:

a $\lambda_{max}$ between 525 and 540 nm, measured in aqueous buffer solution at pH 6 and
a hue angle h according to the CIE L*C*h* color space, between 350 and 5. L* is from 50-90 and C* is from 40 to 100.

Surprisingly, it was observed that heating of such a beetroot starting composition of low moisture content does not result in color loss, but in a color shift from purple-red over red to orange-red, coming along with a hypsochromic shift in the absorbance spectrum (shift from maximum absorbance to shorter wavelength). This shift is not obtained by a spray drying process as will be shown in the comparative examples. An advantage of the invention is further that no color loss occurs larger than 15% during the process.

The present process differs from usual drying processes, e.g. spray- or freeze drying, in that the starting composition of the present process is already dried, i.e. has a low moisture content of less than 15 wt.%, preferably less than 10 wt.%, more preferably less than 7 wt.%, most preferably less than 5 wt.% or even less than 3 wt.%. Starting materials for usual drying process, such as fresh beet roots will have moisture contents of more than 50 wt.%, or even 80 wt.%.

Too high a moisture content of the beetroot starting composition does not lead to the color shift of the invention and also can result in browning or even burning, decrease of color intensity or melting of the product by exceeding the glass transition temperature during heating. Moreover, a higher moisture content can result in the starting material becoming sticky or lumpy, which is not a desired product characteristic.

The beetroot starting composition may comprise at least 0.1 betalains based on dry weight of the beetroot starting composition, preferably at least 0.3 wt.% betalains, more preferably at least 0.5 wt.%. The beetroot composition will generally comprise up to 10 wt.% betalains, in particular up to 15 wt.%, or even up to 20 wt.%.

Quantitative analysis can be carried out by methods known in the art such as high performance liquid chromatography, colorimetry or photometric analysis. A specific method of determining the wt.% betalains is described in "Method betalain content".

Further components in the beetroot starting composition are those obtained from beetroot, e.g. sugars, proteins, minerals, organic acids, vitamins, sterols, purines and phenolic compounds. It can also be envisaged to remove some of these components, e.g. sugars and proteins, in a process of preparing the beetroot starting composition.

In the process of the invention, the beetroot starting composition of low moisture is subjected to a heating step at a temperature of from 65 to 220 °C. A temperature below 65 °C does not result in the color shift. A temperature above 220 °C results in browning of the beetroot composition. Preferably the temperature of the heating step is from 80 to 150 °C.

The heating can be done with any conventional means, such as an oven. It is also possible to use Infrared heating, in particular at the lower end of the heating temperatures.

The heating process should be carried out such that any remaining moisture may be eliminated from the heating means. This optimizes the process for starting materials with a moisture content at the higher end of the range, e.g. from 10 to 15 wt.% moisture.

The duration of the heating step is from 3 minutes to 24 hours (or even more at low temperatures). An optimal range for time and temperature can be easily determined by the skilled person as long as it stays within the ranges described. Generally, the heating step is carried out at a temperature from 80 to 150 °C from 10 to 180 minutes. Unexpectedly, these temperature time conditions do not lead a high pigment loss as it would be expected for a liquid beet composition. In other words, the process of the invention results in a color retention of at least 85% as explained in the next section.

Other ingredients like low molecular sugars (e.g. glucose, fructose), organic acids (e.g. citric acid) or the type of carrier can impact the color shade of the final beetroot composition. Moreover, these ingredients, as well as pH, have an impact on the time required to reach a certain color at given temperature and starting material. A skilled person can readily determine the optimal range of time and temperature with a given starting material.

In order to have an optimal surface area of the beetroot starting composition comprising betalains, the beetroot starting composition has a particle size D50 of from 5 to 2000 $\mu$m.

The process may also include a further step following the heating step wherein the beetroot composition is further ground or milled to the desired particle size. The particle size can also be increased by technologies known in the art, e.g. agglomeration.

The invention also relates to a beetroot composition obtained by the process of the invention.

To conduct the process of the invention a low moisture beetroot starting composition is required. This starting composition can be purchased, e.g. as a standard beetroot powder or can be produced before the process of the invention is conducted. Possible processes to get the starting composition are described below.

Preparation of a beetroot starting composition

Preferably the dry beetroot starting composition is a dried concentrate from red beet. Such a concentrate can be obtained from an extract or a juice of beetroot raw material. A juice or extract can be prepared by first crushing, shredding, chopping or grinding the beetroot raw material, to obtain smaller pieces of beetroot, e.g. several centimetres or millimetres. This process may also comprise a step of (steam) peeling.

In the case of a juice, the crushed raw material is pressed to obtain a juice from the raw material. The juice is dried to a moisture content of less than 15 wt.%. In case of an extract, the crushed raw material is contacted with an aqueous composition or other solvents such as ethanol and methanol to obtain an extract, followed by drying the extract to a moisture content of less than 15 wt.%. The aqueous composition to obtain the extract can contain processing aids such as citric acid, ascorbic acid and lactic acid and/or technological aids such as enzymes, or organic solvents such as ethanol or methanol.

The process to obtain the beetroot starting composition can further comprise steps known in the art, such as centrifugation, filtration or decanting, for instance to remove fibres and other water-insoluble components.

The concentrate can be enriched with known technologies such as membrane filtration, fermentation and chromatography.

According to a preferred embodiment, the process to dry the extract or juice is spray drying. Due to the fast surface augmentation by an atomizer particles are formed very quickly and drying is fast. The liquid is typically dried at inlet temperatures from about 150 to 200°C and outlet temperatures of about 70 to 100 °C. The obtained powder is usually characterized by a particle size of 10-100μm. Additionally, the product obtained can be reduced or increased in particle size.

The process for preparing the beetroot starting material, preferably comprises a step of adding a carrier to the extract or juice, prior to the drying step. Fruit and vegetable juices typically need a carrier to be dried. The carrier leads to an increase of glass transition temperature and therefore allows a process at high temperature like spray drying. Thus, preferably 30 to 80 wt.% on dry matter of a carrier is added to the extract or juice. The carrier may be selected from carriers commonly known in the art, such as maltodextrin, gum acacia, glucose syrups, inulin, starch, whey protein isolate. Preferably the carrier is maltodextrin e.g. with a dextrose equivalent DE from 2 to 20. Freeze Drying can be done without addition of carrier since it is carried out at low temperature below glass transition temperature.

In an alternative embodiment, the beetroot starting composition is obtained by drying fresh beetroot. The dried beetroot is then subjected to an additional heating step which leads to the beetroot composition of the invention. The beetroot can be reduced in size by crushing, chopping, milling, etc. Reduction in size can be carried out before or after the heating step.

The present invention also comprises a process wherein the steps of drying the filtrate or juice to obtain the beetroot starting composition comprising betalains and the step of heating the beetroot starting composition are carried out as a continuous process, e.g. in an oven or fluidized bed dryer or other heating device.

Schematic process overview

Figure 6 shows a schematic overview of the process (100) of the invention. A beetroot starting composition (low moisture) is subjected to a heating step (101) resulting in a beetroot composition of the invention.

Figure 7 shows one embodiment of a process (200) for producing a beetroot starting composition. In this process, beetroot is crushed (201) and a juice is pressed (202), obtaining a beetroot juice. Optionally, this process can comprise a step of removing solids (204), e.g. by centrifugation, filtration or decanting. Optionally, this process can comprise a step of enriching the juice (205), e.g. by membrane filtration, fermentation or chromatography. Step (204) and/or (205) may be carried out after step (202) but precede step (203) which includes drying the (enriched) juice. Step (203) results in the beetroot starting composition that can be fed into process (100).

Figure 8 shows one embodiment of a process (300) for producing a beetroot starting composition. In this process, beetroot is crushed (301) and the crushed beetroot is contacted with a solvent to obtain an extract (302). Optionally, this process can comprise a step of removing solids (304), e.g. by centrifugation, filtration or decanting. Optionally, this process can comprise a step of enriching the juice (305), e.g. by membrane filtration, fermentation or chromatography. Step (304) and/or (305) may be carried out after step (302) but precede step (303) which includes drying the (enriched) extract. Step (303) results in the beetroot starting composition that can be fed into process (100).

Figure 9 shows one embodiment of a process (400) for producing a beetroot starting composition. In this process "fresh" beetroot is dried (401) to obtain a beetroot starting composition of low moisture. Before or after drying the beetroot can be reduced in size (402), for example by crushing, chopping or milling. Step (401) results in the beetroot starting composition that can be fed into process (100).

Figure 10 further illustrates the drying step (203 or 303). In this step (500) the beetroot extract or juice, having a relatively high moisture content, is subjected to a drying process, e.g. spray drying, freeze drying, infrared drying, belt

drying or drum drying (501), resulting in a beetroot starting composition of low moisture. Optionally, a carrier can be added (502) before or during drying step (501).

METHODS

Determining Color retention

The color retention describes the ratio of the composition's color intensity after heat treatment to the color intensity before heat treatment. A high color retention is desirable since it correlates with high retention of pigment concentration or in other words - the higher the color retention the lower the color loss by heat treatment.

Color intensity is defined as the maximum absorbance in the photometric spectrum corrected by the turbidity, expressed as absorbance at 750nm. To measure color intensity the sample is diluted in pH6 by a factor which leads to an absorbance within the linear region of the spectrometer (where Lambert-Beer law is valid). The absorbance value at the peak from 400-700 nm - $A_{max}$ - is corrected by the absorbance at 750nm - $A_{750}$ - and multiplied by the dilution factor - DF:

$$Color\ intensity = (A_{max} - A_{750}) \cdot DF$$

Figure 5 demonstrates the color intensity visually. The spectrum was measured with a spectrophotometer Lambda 25 by Perkin Elmer using software UV WinLab (spectrum step 1 nm). Color retention can be calculated after color intensity was determined before and after heat treatment.

$$Color\ Retention\ [\%] = \frac{color\ intensity_{after\ heat\ treatment}}{color\ intensity_{before\ heat\ treatment}} \cdot 100$$

Determining moisture content (Method Moisture Content)

Shown moisture contents are determined gravimetrically by drying the sample at 70 °C in an oven under vacuum of 50 mbar until constant mass content is reached. Moisture can then be calculated as following:

$$moisture\ content\ [wt.\%] = 100 - \frac{sample\ mass_{after\ drying}}{sample\ mass_{before\ drying}} \cdot 100$$

Determining betalain content (Method Betalain content)

The shown betalain concentrations can be measured following Nilsson 1970. Therefore, the absorbance of an aqueous dilution of the beetroot composition is determined at 538 nm for betacyanins and 480 nm for betaxanthins. The betalain content can then be calculated as following:

$$Betalain\ content\ [wt.\%] = \left(\frac{A_{BC} \cdot DF \cdot MW_{BC} \cdot 1000}{\varepsilon_{BC} \cdot 1} + \frac{A_{BX} \cdot DF \cdot MW_{BX} \cdot 1000}{\varepsilon_{BX} \cdot 1}\right) \cdot 0.0001$$

With:

$A_{BC}$ = absorbance at 538 nm
$MW_{BC}$ = molecular weight of betanin = 550 g·mol$^{-1}$
$\varepsilon_{BC}$ = extinction coefficient betanin = 60000 L·mol$^{-1}$ in $H_2O$
$A_{BX}$ = absorbance at 480 nm
$MW_{BX}$ = molecular weight of vulgaxanthin I = 339 g·mol$^{-1}$
$\varepsilon_{BX}$ = extinction coefficient vulgaxanthin I = 48000 L·mol$^{-1}$ in $H_2O$

Method HPLC

HPLC profiles were monitored with a 1260 Infinity Prime II HPLC (Agilent) equipped with a G7104C pump, a G7129C autosampler (8°C), a G7129C column oven and a G7115A wide range DAD (Diode Array Detector). The HPLC

system was controlled by OpenLAB CDS 2.5.

Separation of compounds was performed on an HiChrom Prevail column (5 μm C18, 150 x 4.6 mm) fitted with a Prevail Alltech All-guard cartridge (5μm C18 7.5 x 4.6mm) operated at a temperature of 35 °C. The mobile phases consisted of 0.2% (v/v) formic acid in water of LC-MS grade (eluent A) and acetonitrile (Eluent B). The gradient program for the HPLC separation was as follows: 2% B to 17% B (40.0 min), followed by a washing step of 70% eluent B and re-equilibration of the column at 2% B for 10 min. The injection volume was 15 μL and the flow rate 0.5 mL/min. Compounds were detected at 504 nm for peak 2 and 4, 526 nm for peak 5 and 534 nm for peak 1 and 3 with a bandwidth of 4 nm. The UV-VIS spectrum of peak 1-5 is detected to check $\lambda_{max}$ in the range from 190 to 780nm (spectrum step 2 nm). All samples were diluted in water by a factor that leads to a color intensity of 40 in pH6 buffer and filtered using a 0.45 μm syringe filter.

Method$\lambda_{max}$

$\lambda_{max}$ is determined photometrically by diluting the sample in a pH6 buffer by a factor which leads to an absorption maximum within the limits of the photometric system. $\lambda_{max}$ is determined at the absorption peak in the visible area of the spectrum between 400 and 700 nm at pH6 (spectrum step 1 nm). For the examples the spectra were measured with a spectrophotometer Lambda 25 by Perkin Elmer using software UV WinLab.

DESCRIPTION OF THE DRAWINGS

Figure 1 shows the HPLC profile (C18) of a beetroot composition according to the state of the art.
Figure 2 shows the HPLC profile (C18) of a beetroot composition according to the invention.
Figure 3 shows the supposed reactions that predominantly occur during the process of the invention.
Figure 4 shows the supposed reactions that predominantly occur during the heating of aqueous beet compositions.
Figure 5 shows an absorption spectrum of Example 1 and demonstration of color values $A_{max}$, $A_{750}$ and $\lambda_{max}$.
Figure 6 shows a schematic overview of the process (100) of the invention.
Figure 7 shows one embodiment of a process (200) for producing a beetroot starting composition.
Figure 8 shows one embodiment of a process (300) for producing a beetroot starting composition.
Figure 9 shows one embodiment of a process (400) for producing a beetroot starting composition.
Figure 10 further illustrates the drying step (203 or 303).

EXAMPLES

A summary of all examples is given in Table 2. For all examples, the starting compositions have a value L* of 63-66 and a value C* of 63-68. The compositions obtained have a value L* of 66-75 and a value C* of 54-60. Hue angles are described for each example.

Example 1 (Shift by convective heat of spray dried beet juice concentrate)

Commercially available beet juice concentrates were mixed with processing aids. The addition of maltodextrin is required to increase the mixture's glass transition temperature and, in this way, allow spray-drying of the product. The mixture was spray-dried on industrial scale to a dry powder with a final moisture content of 2.7 wt.%, a betalain content of 0.53 wt.% and a maltodextrin content of 58 wt.%. The powder has a pink color shade, described by a $\lambda_{max}$ of 533 nm and a hue angle h of 354 in pH 6 as well as by a HPLC ratio 1 of 0.04 and a HPLC ratio 2 of 0.01. This starting material was then heat treated at 120 °C for 40 min in a lab scale oven. It is important that the present water from the powder can evaporate so that the powder remains physically stable without melting or caking. Even though the heat sensitive beet is exposed to heat it retains its color intensity by 100%. Moreover, the process leads to a color shift from pink to red, characterized by **a** $\lambda_{max}$ of 511 nm, a hue angle of 16, a HPLC ratio 1 of 0.60 and a HPLC ratio 2 of 0.37. The change of the visible absorption spectrum can be seen in Figure 1.

Example 2 (shift by infrared heating of spray dried beet extract)

An aqueous extract from fresh whole beets was produced. As processing aids ascorbic and citric acid and enzymes were used. This water-based extract was mixed with water and maltodextrin and spray-dried on lab-scale to a powder with a moisture content of 1.2 wt.%, a betalain content of 0.54 wt.% and a maltodextrin content of 62 wt.%. This powder was then used as a starting material. With infrared heating the final color shade and HPLC profile can be achieved at much lower temperatures than in a typical oven. Therefore, this example was heated for 60 min at 80°C with infrared

heating. This heating step turned the initial red powder ($\lambda_{max}$ = 533 nm, h = 354; HPLC ratio 1 = 0.04; HPLC ratio 2 = 0.01) to a pink-red powder with **a** $\lambda_{max}$ of 514 nm, a hue angle h of 7 and a HPLC ratio 1 of 0.42 and a HPLC ratio 2 of 0.32 while the color retention was still 99%.

Example 3 (shift by convective heat at high temperature of a starting composition of high betalain content

Example 3 shows that a starting material of a high betalain content is a suitable starting material. A commercially available beet concentrate with a betalain content of 11.3 wt.% and a moisture content of 3.6 wt.% shows color values of $\lambda_{max}$ = 525 nm and a hue angle of 359 and a HPLC ratio 1 of 0.16 and a HPLC ratio 2 of 0.04. Since this powder is physically stable at high temperatures it was heated at 200°C for 5 min in a lab-scale oven. The color retention was even 101%, which might be explained by the water loss during the heat process. The heating step led to a powder of red color shade with a HPLC ratio 1 of 0.62 and a HPLC ratio 2 of 0.55 and a $\lambda_{max}$ of 509 nm and a hue angle h of 19. This example demonstrates the possible high betalain content of the starting material as well as the possibility of high temperature treatment at short process times if the powder is physically stable. Even higher temperatures are considered feasible, but color standardization becomes harder since the exact time-temperature combination is harder to hit with such short exposure times.

Example 4 (shift by convective heat of a fermented and spray dried beet extract)

Example 4 shows that the invention also works for starting materials which have passed a fermentation step. An aqueous beet extract was mixed with water and a yeast which metabolized sugars. The fermented extract was mixed with maltodextrin and spray-dried to a moisture content of 1.2 wt.%, a betalain content of 0.65 wt.% and a maltodextrin content of 82 wt.%. This pink starting material of HPLC ratio 1 of 0.05 and HPLC ratio 2 of 0.02 as well as of color values of $\lambda_{max}$ of 534nm and h of 353 was heated for 120min at 120°C which led to a red color shade described by HPLC ratio 1 of 0.78 and HPLC ratio 2 of 0.69 and color values $\lambda_{max}$ of 506 nm and a hue angle h of 25.

Example 5 (shift by convective heat of a spray dried extract of alternative carrier)

The same aqueous beet extract as in Example 2 was used, but not mixed with water and maltodextrin, but with water and gum Arabic as carrier material for subsequent spray-drying to a moisture of 1.5 wt.% and a betalain content of 0.55 wt.%. Heating for 120 min at 120°C shifted the pink powder (HPLC ratio 1 and 2 of 0.03 and 0; $\lambda_{max}$ of 534 nm; h of 350) to a red one with a HPLC ratio 1 of 0.65 and a HPLC ratio 2 of 0.61 and color parameters $\lambda_{max}$ of 511 nm and h of 23.

Example 6 (shift by convective heat of dried beetroot pieces)

Fresh beet roots from a local supermarket were sliced and dried in a cabinet dryer at 50°C. The dry beet chips were milled to fine pieces. This product with a moisture of 2 wt.% and a betalain content of 0.57 wt.% was used as a starting material. No other drying step was applied and therefore no carrier was required. Heating for 40 min led to a color shift characterized by a change of $\lambda_{max}$ from 534 nm to 519 nm and of h from 2 to 15. Color retention is with 88% still high and the HPLC ratio 1 turns from 0.01 to 0.26 and HPLC ratio 2 from 0 to 0.27.

Example 7 (shift by infrared heat at low temperature of spray dried beet extract)

The starting material of example 2 was exposed to 65°C only. In order to obtain a color shade of the present invention a heating time of 870 min was required even though infrared technology was used. Therefore, the lower temperature limit of 65°C was defined for the process. The final product is characterized by HPLC ratios 1 of 0.35 and HPLC ratio 2 of 0.28 as well as by color parameters $\lambda_{max}$ of 517 nm and a hue angle h of 5.

Table 2 Overview of examples

| | Starting material | | | | | | | Proc. conditions | | Composition | | | | |
|---|---|---|---|---|---|---|---|---|---|---|---|---|---|---|
| | | Betalain content (wt.%) | Moisture content (wt.%) | HPLC ratio 1 | HPLC ratio 2 | $\lambda_{max}$ (nm) | h | Heating time (min) | Heating temp. (°C) | Color retention (%) | HPLC ratio 1 | HPLC ratio 2 | $\lambda_{max}$ (nm) | h |
| 1 | Powder from commercially available beet juice concentrate | 0.53 | 2.7 | 0.04 | 0.01 | 533 | 354 | 40 | 120 | 100 | 0.60 | 0.37 | 511 | 16 |
| 2 | Powder from aqueous beet extract | 0.54 | 1.2 | 0.04 | 0.01 | 533 | 353 | 60 | 80 (IR) | 99 | 0.42 | 0.32 | 514 | 7 |
| 3 | Commercially available beet concentrate (powder) | 11.3 | 3.6 | 0.16 | 0.04 | 525 | 359 | 5 | 200 | 101 | 0.62 | 0.55 | 509 | 19 |
| 4 | Powder from fermented aqueous beet extract | 0.65 | 1.2 | 0.05 | 0.02 | 534 | 353 | 120 | 120 | 100 | 0.78 | 0.69 | 506 | 25 |
| 5 | Powder from aqueous beet extract | 0.55 | 1.5 | 0.03 | 0.00 | 534 | 350 | 120 | 120 | 104 | 0.65 | 0.61 | 511 | 23 |
| 6 | Dried & milled beet from market fresh beet roots | 0.57 | 2 | 0.01 | 0.00 | 534 | 2 | 40 | 120 | 88 | 0.26 | 0.27 | 519 | 15 |
| 7 | Powder from aqueous beet extract | 0.54 | 1.2 | 0.04 | 0.01 | 533 | 353 | 870 | 65 (IR) | 94 | 0.35 | 0.28 | 517 | 5 |

Comparative examples

An overview of all comparative examples is given in Table 3. For all Comparative examples, the starting compositions have a value L* of 62-66 and a value C* of 58-67. The compositions obtained have a value L* of 65-78 and a value C* of 58-67. Hue angles are given for each comparative example.

Comparative example 1 (Heat treatment beet juice of high moisture)

This example is a reproduction of a trial by Herbach 2004. Fresh beetroots were obtained from a local supermarket and pressed. The obtained juice had a moisture content of 91.5 wt.%. The color shade was quite yellowish with a hue angle h of 13, likely caused by a high content of vulgaxanthin I. The juice is also characterized by HPLC ratios 1 and 2 of 0 as well as by a $\lambda_{max}$ of 534 nm. Heating the product to 85°C for 1 hour led to a high color loss, shown by the low color retention of 76%. Moreover Peaks 2,4 and 5 did not occur which leads to HPLC ratios 1 and 2 of 0. $\lambda_{max}$ shifted to 480 nm, believed to be the result of yellow degradation products like neobetanin which increase during the heating in the high moisture environment. The hue angle h increased to 33°. Further heating resulted in higher hue angles, but also in even lower color retentions and peaks 2,4 and 5 did still not occur. Thus, heating of a liquid beet juice of high moisture content does not lead to a desirable composition.

Comparative example 2 (Spray-drying of beet extract without additional heating step)

This example tested the possibility of spray-drying as a process for shifting the color of the beetroot starting composition. Therefore, the outlet temperature of the lab-scale spray dryer was increased as much as possible to 120°C. The same aqueous beet extract was used as for example 5, but no fermentation step was included. The beet concentrate was mixed with water and maltodextrin. Spray drying pump speed and aspirator were kept as low as possible to get the highest possible heat exposure time of the droplets/particles within the spray dryer.
Even though the initial beet concentrate was the same as for example 5 no color shift was obtained as can be seen by HPLC ratio 1 of 0.03 and HPLC ratio 2 of 0.01 as well as by $\lambda_{max}$ of 533 nm and a hue angle h of 353. Color retention was good though. It can be concluded that the heat exposure time during usual spray-drying is too short to get the betalain composition of the present invention.

Comparative example 3 (low maltodextrin / low physical stability)

The same fermented aqueous beet extract of example 5 was used to get a powder by spray drying. In difference to example 5 this product was made with a low amount of maltodextrin and thus is characterized by a comparatively low glass transition temperature. This mixture was still suitable for spray drying which led to a moisture content of 5 wt.%, a betalain content of 1.53 wt.% and a maltodextrin content of 50 wt.%, as well as HPLC ratio 1 of 0.15 and HPLC ratio 2 of 0.08. Also, color values are within the limits for the starting material with **a** $\lambda_{max}$ of 533 nm and a hue angle h of 354. However, heating of the powder at 120°C for 120 min did result in a low color retention of 44%. All other parameters are within the limits of the invention with HPLC ratios 1 and 2 of 1 and color values of $\lambda_{max}$ of 503 nm and a hue angle h of 59. The high color loss can be explained by the poor physical stability of the starting material. The low maltodextrin content led to a low glass transition temperature. Therefore, the powder changed significantly at exposure to 120°C so that it was not flowable anymore and even got a sponge-like texture. So, this time-temperature window was not appropriate for this starting material.

Comparative example 4 (heating at 60°C, outside invention range)

The same starting material of example 1 was exposed to 60°C under infrared light for even 900min. The color values $\lambda_{max}$ of 525 nm and h of 1 show that there was just a minor shift in color. Also, the peaks 2,4 and 5 of the HPLC profile did not reach large areas as characterized by values of 0.19 and 0.12 for HPLC ratio 1 and 2 respectively. It was concluded that temperatures of 60°C, even with infrared technology, are not high enough to get the present betalain composition in a relevant time frame.

Comparative example 5 (relatively short heating time)

The same starting material of example 1 and the comparative example 4 was exposed to 120°C for 15 min in a lab-scale oven. This process led to a betalain composition as characterized by HPLC ratios 1 of 0.16 and HPLC ratio 2 of 0.07 as well as by **a** $\lambda_{max}$ of 526 nm and a hue angle h of 359. It can be concluded that for this starting material 15 min at the given temperature is too short to get the color shift.

Comparative example 6 (commercial betanin standard)

This example represents a commercially available betanin standard. Its parameters HPLC ratio 1 and 2, $\lambda_{max}$ and hue angle are not within the limits of the present invention. However, it contains the compounds of peak 2,4 and 5 which can be seen from the HPLC ratio 1 of 0.15 and HPLC ratio 2 of 0.08. This demonstrates that the compounds of peak 2, 4 and 5 are typical for betalain products, but that their share of overall pigment content is low compared to the present invention.

Table 3 Overview of comparative examples

| | Starting material | | | | | | | Process conditions | | Composition | | | | |
|---|---|---|---|---|---|---|---|---|---|---|---|---|---|---|
| | **Description** | **Betalain content (wt.%)** | **Moisture content (wt.%)** | **HPLC ratio 1** | **HPLC ratio 2** | $\lambda_{max}$ **(nm)** | **h** | **Heating time** | **Heating temp.** | **Color retention** | **HPLC ratio 1** | **HPLC ratio 2** | $\lambda_{max}$ **(nm)** | **h** |
| 1 | Beet juice | 0.06 | 91.5 | 0.00 | 0.00 | 535 | 13 | 1h | 85°C | 76% | 0.00 | 0.00 | 480 | 33 |
| 2 | High temperature powder | 0.14 (liquid slurry) | 64.6 | 0.00 | 0.00 | 533 | 353 | Duration of spray drying: <2 min | 120°C Outlet temperature | not determined | 0.03 | 0.01 | 533 | 353 |
| 3 | Fermented powder (low carrier) | 1.53 | 5.0 | 0.15 | 0.08 | 533 | 353 | 120min | 120°C | 44% | 1 | 1 | 503 | 59 |
| 4 | Powder from commercially available beet juice concentrate | 0.53 | 2.7 | 0.04 | 0.01 | 533 | 354 | 900min | 60°C (IR) | 99% | 0.19 | 0.12 | 525 | 1 |
| 5 | Powder from commercially available beet juice concentrate | 0.53 | 2.7 | 0.04 | 0.01 | 533 | 354 | 15min | 120°C | 98% | 0.16 | 0.07 | 526 | 359 |
| 6 | Commercially available betanin standard | 0.48 | 2.4 | 0.15 | 0.08 | 528 | 353 | | | | | | | |

REFERENCES

Herbach, K. M.; Stintzing, F. C.; Carle, R. (2004): Impact of Thermal Treatment on Color and Pigment Pattern of Red Beet (Beta vulgaris L.) Preparations. In: J Food Science 69 (6), C491-C498. DOI: 10.1111/j.1365-2621.2004.tb10994.x.

Miguel, Maria Graça (2018): Betalains in Some Species of the Amaranthaceae Family: A Review. In: Antioxidants (Basel, Switzerland) 7 (4). DOI: 10.3390/antiox7040053.

Nemzer, Boris; Pietrzkowski, Zbigniew; Spórna, Aneta; Stalica, Paweł; Thresher, Wayne; Michałowski, Tadeusz; Wybraniec, Sławomir (2011): Betalainic and nutritional profiles of pigment-enriched red beet root (Beta vulgaris L.) dried extracts. In: Food *Chemistry* 127 (1), S. 42-53. DOI: 10.1016/j.foodchem.2010.12.081.

Nilsson, T. (1970): Studies into the pigments in beetroot (Beta vulgaris L. ssp. vulgaris var. rubra L.). In: Lantbrukshogskolans Annaler 36, S. 179-219. Wybraniec, Sławomir (2005): Formation of decarboxylated betacyanins in heated purified betacyanin fractions from red beet root (Beta vulgaris L.) monitored by LC-MS/MS. In: *Journal of agricultural and food chemistry* 53 (9), S. 3483-3487. DOI: 10.1021/jf048088d.

Wybraniec, Sławomir (2005): Formation of decarboxylated betacyanins in heated purified betacyanin fractions from red beet root (Beta vulgaris L.) monitored by LC-MS/MS. In: *Journal of agricultural and food chemistry* 53 (9), S. 3483-3487. DOI: 10.1021/jf048088d.

## Claims

**1.** A beetroot composition comprising betalains, having the following feature:

ratios of HPLC peak areas as detected with a DAD detector of:

$$HPLC\ Ratio\ 1 = \frac{\sum area_{504nm}}{\sum area_{504nm} + \sum area_{534nm}} \geq 0.25$$

and

$$HPLC\ Ratio\ 2 = \frac{area_{526nm}}{area_{526nm} + \sum area_{534nm}} \geq 0.25$$

wherein $\Sigma area_{504\text{nm}}$ is the sum of peak areas detected at 504 nm, wherein the peaks show a $\lambda_{max}$ in the UV-Vis spectrum between 502 nm and 510 nm;
$\sum area_{534nm}$ is the sum of peak areas detected at 534 nm, wherein the peaks show a $\lambda_{max}$ in the UV-Vis spectrum between 532 nm and 540 nm and
$area_{526nm}$ is the peak area detected at 526 nm, wherein the peak shows a $\lambda_{max}$ in the UV-Vis spectrum between 522 nm and 530 nm.

**2.** The beetroot composition according to claim 1, wherein

HPLC Ratio 1 > 0.3, preferably > 0.5, more preferably > 0.7.

**3.** The beetroot composition according to claim 1 or 2, wherein

HPLC Ratio 2 > 0.3, preferably > 0.5, more preferably > 0.7.

**4.** The beetroot composition according to any one of claims 1 to 3, further having the following features:

a $\lambda_{max}$ from 495 to 524 nm, measured in aqueous buffer solution at pH 6; and
a hue angle h according to the CIE L*C*h* color space, from 5 to 55.

**5.** The beetroot composition according to claim 4, wherein

$\lambda_{max}$ is from 504 to 520 nm; and
the hue angle h is from 8 to 35.

**6.** The beetroot composition according to any one of the preceding claims, having a moisture content of less than 15 wt.%, preferably less than 10 wt.%, more preferably less than 5 wt.%.

**7.** A formulation comprising 5 to 70 wt.%, based on the weight of the formulation, of the beetroot composition according to any one of the preceding claims, and a carrier or solvent.

**8.** A foodstuff comprising 0.01 to 15 wt.%, based on the weight of the foodstuff, of the beetroot composition according to any one of claims 1 to 6 or the formulation of claim 7, which is preferably a beverage, dairy product, chocolate product, savoury product or confectionary.

**9.** A process of preparing a beetroot composition comprising betalains according to claim 1, comprising the steps of:

providing a beetroot starting composition comprising betalains having a moisture content of less than 15 wt.% based on the weight of the beetroot starting composition; and
a ratio of HPLC peak areas as determined with a DAD detector of:

$$HPLC\ Ratio\ 1 = \frac{\sum area_{504nm}}{\sum area_{504nm} + \sum area_{534nm}} < 0.25$$

and/or

$$HPLC\ Ratio\ 2 = \frac{area_{526nm}}{area_{526nm} + \sum area_{534nm}} < 0.25$$

wherein $\Sigma area_{504nm}$ is the sum of peak areas detected at 504 nm, wherein the peaks show a $\lambda_{max}$ in the UV-Vis spectrum between 502 nm and 510 nm;
$\Sigma area_{534nm}$ is the sum of peak areas detected at 534 nm, wherein the peaks show a $\lambda_{max}$ in the UV-Vis spectrum between 532 nm and 540 nm and
$area_{526nm}$ is the peak area detected at 526 nm, wherein the peak shows a $\lambda_{max}$ in the UV-Vis spectrum between 522 nm and 530 nm;
heating the beetroot starting composition to a temperature of from 65 to 220 °C.

**10.** The process according to claim 9, wherein the beetroot starting composition has:

a $\lambda_{max}$ between 525 and 540 nm, measured in aqueous buffer solution at pH 6 and/or
a hue angle h according to the CIE L*C*h* color space, between 350 and 5.

**11.** The process according to claim 9 or 10, wherein the beetroot starting composition is heated to a temperature of from 80 to 150 °C for 10 to 180 minutes.

**12.** The process according to any one of claims 9 to 11, wherein the beetroot starting composition comprises at least 0.1 wt.% betalains, preferably at least 0.3 wt.%, more preferably at least 0.5 wt.% betalains, based on the weight of the beetroot starting composition.

**13.** The process according to any one of claims 9 to 12, wherein the beetroot starting composition comprising betalains has a moisture content of less than 10 wt.%, preferably less than 5 wt.%, based on the weight of the beetroot starting composition.

**14.** The process according to any one of claims 9 to 13, wherein the beetroot starting composition is a beetroot

concentrate.

**15.** The process according to claim 14, wherein the beetroot concentrate is obtained by a process comprising the steps of:

crushing beetroot,
pressing a juice from the crushed beetroot and
drying the juice.
or wherein the beetroot concentrate is obtained
by a process comprising the steps of

crushing beetroot,
contacting the crushed beetroot with an aqueous composition or solvent to obtain an extract,
drying the extract.

**16.** The process according to claim 15, wherein the juice or extract is dried by spray-drying, preferably at an outlet temperature of from 70 to 100 °C .

**17.** The process according to any one of claims 9 to 13, wherein the beetroot starting composition is obtained by drying beetroot, that has optionally been reduced in size.

**Patentansprüche**

**1.** Betalaine umfassende Rote-Bete-Zusammensetzung mit dem folgenden Merkmal:

Verhältnisse der mit einem DAD-Detektor detektierten HPLC-Peakflächen:

$$HPLC - Verhältnis\ 1 = \frac{\sum - Fläche_{504\ nm}}{\sum - Fläche_{504\ nm} + \sum - Fläche_{534\ nm}} \geq 0{,}25$$

und

$$HPLC - Verhältnis\ 2 = \frac{Fläche_{526\ nm}}{Fläche_{526\ nm} + \sum - Fläche_{534\ nm}} \geq 0{,}25$$

wobei $\sum$-Fläches$_{504nm}$ die Summe der bei 504 nm detektierten Peakflächen ist, wobei die Peaks eine $\lambda_{max}$ im UV-Vis-Spektrum zwischen 502 nm und 510 nm zeigen;
$\sum$-Fläche$_{534nm}$ die Summe der bei 534 nm detektierten Peakflächen ist, wobei die Peaks eine $\lambda_{max}$ im UV-Vis-Spektrum zwischen 532 nm und 540 nm zeigen und
*Fläche*$_{526nm}$ die bei 526 nm detektierte Peakfläche ist, wobei der Peak eine $\lambda_{max}$ im UV-Vis-Spektrum zwischen 522 nm und 530 nm zeigt.

**2.** Rote-Bete-Zusammensetzung nach Anspruch 1, wobei

HPLC-Verhältnis 1 > 0,3, bevorzugt > 0,5, besonders bevorzugt > 0,7.

**3.** Rote-Bete-Zusammensetzung nach Anspruch 1 oder 2, wobei

HPLC-Verhältnis 2 > 0,3, bevorzugt > 0,5, besonders bevorzugt > 0,7.

**4.** Rote-Bete-Zusammensetzung nach einem der Ansprüche 1 bis 3, die weiterhin die folgenden Merkmale aufweist:

eine $\lambda_{max}$ von 495 bis 524 nm, gemessen in wässriger Pufferlösung bei pH 6; und
einen Farbtonwinkel h gemäß CIE L*C*h*-Farbraum von 5 bis 55.

**5.** Rote-Bete-Zusammensetzung nach Anspruch 4, wobei

$\lambda_{max}$ 504 bis 520 nm beträgt; und
der Farbtonwinkel h 8 bis 35 beträgt.

**6.** Rote Bete-Zusammensetzung nach einem der vorhergehenden Ansprüche mit einem Feuchtigkeitsgehalt von weniger als 15 Gew.-%, bevorzugt weniger als 10 Gew.-%, besonders bevorzugt weniger als 5 Gew.-%.

**7.** Formulierung, umfassend 5 bis 70 Gew.-%, bezogen auf das Gewicht der Formulierung, der Rote-Bete-Zusammensetzung nach einem der vorhergehenden Ansprüche und einen Träger oder ein Lösungsmittel.

**8.** Lebensmittel, umfassend 0,01 bis 15 Gew.-%, bezogen auf das Gewicht des Lebensmittels, der Rote-Bete-Zusammensetzung nach einem der Ansprüche 1 bis 6 oder der Formulierung nach Anspruch 7, bei dem es sich vorzugsweise um ein Getränk, ein Milchprodukt, ein Schokoladenprodukt, ein herzhaftes Produkt oder Süßwaren handelt.

**9.** Verfahren zur Herstellung einer Betalaine umfassenden Rote-Bete-Zusammensetzung nach Anspruch 1, welches die folgenden Schritte umfasst:

das Bereitstellen einer Rote-Bete-Ausgangszusammensetzung, die Betalane mit einem Feuchtigkeitsgehalt von weniger als 15 Gew.-%, bezogen auf das Gewicht der Rote-Bete-Ausgangszusammensetzung, umfasst; und mit einem Verhältnis der mit einem DAD-Detektor bestimmten HPLC-Peakflächen von:

$$HPLC - Verhältnis\ 1 = \frac{\sum - Fläche_{504\ nm}}{\sum - Fläche_{504\ nm} + \sum - Fläche_{534\ nm}} < 0{,}25$$

und/oder

$$HPLC - Verhältnis\ 2 = \frac{Fläche_{526\ nm}}{Fläche_{526\ nm} + \sum - Fläche_{534\ nm}} < 0{,}25$$

wobei $\Sigma$-*Fläche*$_{504nm}$ die Summe der bei 504 nm detektierten Peakflächen ist, wobei die Peaks eine $\lambda_{max}$ im UV-Vis-Spektrum zwischen 502 nm und 510 nm zeigen;
$\Sigma$-*Fläche*$_{534nm}$ die Summe der bei 534 nm detektierten Peakflächen ist, wobei die Peaks eine $\lambda_{max}$ im UV-Vis-Spektrum zwischen 532 nm und 540 nm zeigen und
*Fläche*$_{526nm}$ die bei 526 nm detektierte Peakfläche ist, wobei der Peak eine $\lambda_{max}$ im UV-Vis-Spektrum zwischen 522 nm und 530 nm zeigt;
das Erhitzen der Rote-Bete-Ausgangszusammensetzung auf eine Temperatur von 65 bis 220 °C.

**10.** Verfahren nach Anspruch 9, wobei die Rote-Bete-Ausgangszusammensetzung Folgendes aufweist:

eine $\lambda_{max}$ zwischen 525 und 540 nm, gemessen in wässriger Pufferlösung bei pH 6, und/oder
einen Farbtonwinkel h gemäß CIE L*C*h*-Farbraum zwischen 350 und 5.

**11.** Verfahren nach Anspruch 9 oder 10, **dadurch gekennzeichnet, dass** die Rote-Bete-Ausgangszusammensetzung 10 bis 180 Minuten auf eine Temperatur von 80 bis 150 °C erhitzt wird.

**12.** Verfahren nach einem der Ansprüche 9 bis 11, wobei die Rote-Beete-Ausgangszusammensetzung mindestens 0,1 Gew.-% Betalaine, bevorzugt mindestens 0,3 Gew.-%, besonders bevorzugt mindestens 0,5 Gew.-% Betalaine, bezogen auf das Gewicht der Rote-Beete-Ausgangszusammensetzung, umfasst.

**13.** Verfahren nach einem der Ansprüche 9 bis 12, wobei die Betalaine umfassende Rote-Bete-Ausgangszusammensetzung einen Feuchtigkeitsgehalt von weniger als 10 Gew.-%, vorzugsweise weniger als 5 Gew.-%, bezogen auf das Gewicht der Rote-Bete-Ausgangszusammensetzung, aufweist.

**14.** Verfahren nach einem der Ansprüche 9 bis 13, wobei die Rote-Bete-Ausgangszusammensetzung ein Rote-Bete-Konzentrat ist.

**15.** Verfahren nach Anspruch 14, wobei das Rote-Bete-Konzentrat durch ein Verfahren erhalten wird, das die folgenden Schritte umfasst:

das Zerquetschen der Rote Bete,
das Ausdrücken eines Safts aus der zerquetschten Rote Bete und
das Trocknen des Safts,
oder wobei das Rote-Bete-Konzentrat erhalten wird
durch ein Verfahren, der die folgenden Schritte umfasst:

das Zerquetschen der Rote Bete,
das In-Kontakt-Bringen der zerquetschten Rote Bete mit einer wässrigen Zusammensetzung oder einem wässrigen Lösungsmittel unter Erhalt eines Extrakts,
das Trocknen des Extrakts.

**16.** Verfahren nach Anspruch 15, **dadurch gekennzeichnet, dass** der Saft oder Extrakt durch Sprühtrocknung, vorzugsweise bei einer Austrittstemperatur von 70 bis 100 °C, getrocknet wird.

**17.** Verfahren nach einem der Ansprüche 9 bis 13, wobei die Rote-Bete-Ausgangszusammensetzung durch Trocknen von Roter Bete erhalten wird, die gegebenenfalls zerkleinert wurde.

**Revendications**

**1.** Composition de betterave comprenant des bétalaïnes et présentant la caractéristique suivante :

des rapports de surfaces de pics de chromatographie liquide à haute performance (HPLC), détectées à l'aide d'un détecteur à barrette de diodes (DAD) de :

$$\text{Rapport HPLC 1} = \frac{\sum area_{504nm}}{\sum area_{504nm} + \sum area_{534nm}} \geq 0{,}25$$

et

$$\text{Rapport HPLC 2} = \frac{area_{526nm}}{area_{526nm} + \sum area_{534nm}} \geq 0{,}25$$

dans laquelle $\Sigma area_{504nm}$ est la somme de surfaces de pics détectées à 504 nm, dans lesquels les pics présentent une longueur d'onde maximale d'absorption, $\lambda_{max}$, dans le spectre UV-Vis entre 502 nm et 510 nm ;
$\Sigma area_{534nm}$ est la somme de surfaces de pics détectées à 534 nm, dans lesquels les pics présentent une $\lambda_{max}$ dans le spectre UV-Vis entre 532 nm et 540 nm, et
$area_{526nm}$ est la surface de pic détectée à 526 nm, dans lequel le pic présente une $\lambda_{max}$ dans le spectre UV-Vis entre 522 nm et 530 nm.

**2.** Composition de betterave selon la revendication 1, dans laquelle

Rapport HPLC 1 > 0,3, de préference > 0,5, plus préférentiellement > 0,7.

**3.** Composition de betterave selon la revendication 1 ou 2, dans laquelle

Rapport HPLC 2 > 0,3, de préference > 0,5, plus préférentiellement > 0,7.

**4.** Composition de betterave selon l'une quelconque des revendications 1 à 3, présentant en outre les caractéristiques suivantes :

une $\lambda_{max}$ de 495 à 524 nm, mesurée dans une solution tampon aqueuse à pH 6 ; et

un angle de teinte h selon l'espace colorimétrique CIE L*C*h*, de 5 à 55.

**5.** Composition de betterave selon la revendication 4, dans laquelle

$\lambda_{max}$ est comprise entre 504 et 520 nm ; et
l'angle de teinte h est compris entre 8 et 35.

**6.** Composition de betterave selon l'une quelconque des revendications précédentes, présentant une teneur en humidité inférieure à 15% en poids, de préférence inférieure à 10% en poids, plus préférentiellement inférieure à 5% en poids.

**7.** Formulation comprenant de 5 à 70% en poids, par rapport au poids de la formulation, de la composition de betterave selon l'une quelconque des revendications précédentes, et un milieu porteur ou un solvant.

**8.** Denrée alimentaire comprenant de 0,01 à 15% en poids, par rapport au poids de la denrée alimentaire, de la composition de betterave selon l'une quelconque des revendications 1 à 6 ou de la formulation de la revendication 7, qui est de préférence une boisson, un produit laitier, un produit chocolaté, un produit salé ou une confiserie.

**9.** Procédé de préparation d'une composition de betterave comprenant des bétalaïnes selon la revendication 1, comprenant les étapes de :

fourniture d'une composition de départ de betterave comprenant des bétalaïnes présentant une teneur en humidité inférieure à 15% en poids par rapport au poids de la composition de départ de betterave ; et
un rapport de surfaces de pics HPLC détectées à l'aide d'un détecteur DAD de :

$$\textit{Rapport HPLC 1} = \frac{\sum area_{504nm}}{\sum area_{504nm} + \sum area_{534nm}} < 0{,}25$$

et/ou

$$\textit{Rapport HPLC 2} = \frac{area_{526nm}}{area_{526nm} + \sum area_{534nm}} < 0{,}25$$

dans laquelle $\Sigma area_{504nm}$ est la somme de surfaces de pics détectées à 504 nm, dans lesquels les pics présentent une $\lambda_{max}$ dans le spectre UV-Vis entre 502 nm et 510 nm ;
$\Sigma area_{534nm}$ est la somme de surfaces de pics détectées à 534 nm, dans lesquels les pics présentent une $\lambda_{max}$ dans le spectre UV-Vis entre 532 nm et 540 nm, et
$area_{526nm}$ est la surface de pic détectée à 526 nm, dans lequel le pic présente une $\lambda_{max}$ dans le spectre UV-Vis entre 522 nm et 530 nm ;
chauffage de la composition de départ de betterave à une température comprise entre 65 et 220°C.

**10.** Procédé selon la revendication 9, dans lequel la composition de départ de betterave présente :

une $\lambda_{max}$ entre 525 et 540 nm, mesurée dans une solution tampon aqueuse à pH 6, et/ou
un angle de teinte h selon l'espace colorimétrique CIE L*C*h*, compris entre 350 et 5.

**11.** Procédé selon la revendication 9 ou 10, dans lequel la composition de départ de betterave est chauffée à une température de 80 à 150°C pendant 10 à 180 minutes.

**12.** Procédé selon l'une quelconque des revendications 9 à 11, dans lequel la composition de départ de betterave comprend au moins 0,1% en poids de bétalaïnes, de préférence au moins 0,3% en poids de bétalaïnes, plus préférentiellement au moins 0,5% en poids de bétalaïnes, par rapport au poids de la composition de départ de betterave.

**13.** Procédé selon l'une quelconque des revendications 9 à 12, dans lequel la composition de départ de betterave comprenant des bétalaïnes présente une teneur en humidité inférieure à 10% en poids, de préférence inférieure à 5% en poids, par rapport au poids de la composition de départ de betterave.

**14.** Procédé selon l'une quelconque des revendications 9 à 13, dans lequel la composition de départ de betterave est un concentré de betterave.

**15.** Procédé selon la revendication 14, dans lequel le concentré de betterave est obtenu par un procédé comprenant les étapes de :

concassage d'une betterave,
pressage d'un jus à partir de la betterave concassée, et
séchage du jus ;

ou dans lequel le concentré de betterave est obtenu par un procédé comprenant les étapes de :

concassage d'une betterave,
mise en contact de la betterave concassée avec une composition aqueuse ou un solvant pour obtenir un extrait,
séchage de l'extrait.

**16.** Procédé selon la revendication 15, dans lequel le jus ou l'extrait est séché par séchage par atomisation, de préférence à une température de sortie comprise entre 70 et 100°C.

**17.** Procédé selon l'une quelconque des revendications 9 à 13, dans lequel la composition de départ de betterave est obtenue par séchage d'une betterave, dont la taille a été éventuellement réduite.

Figure 1

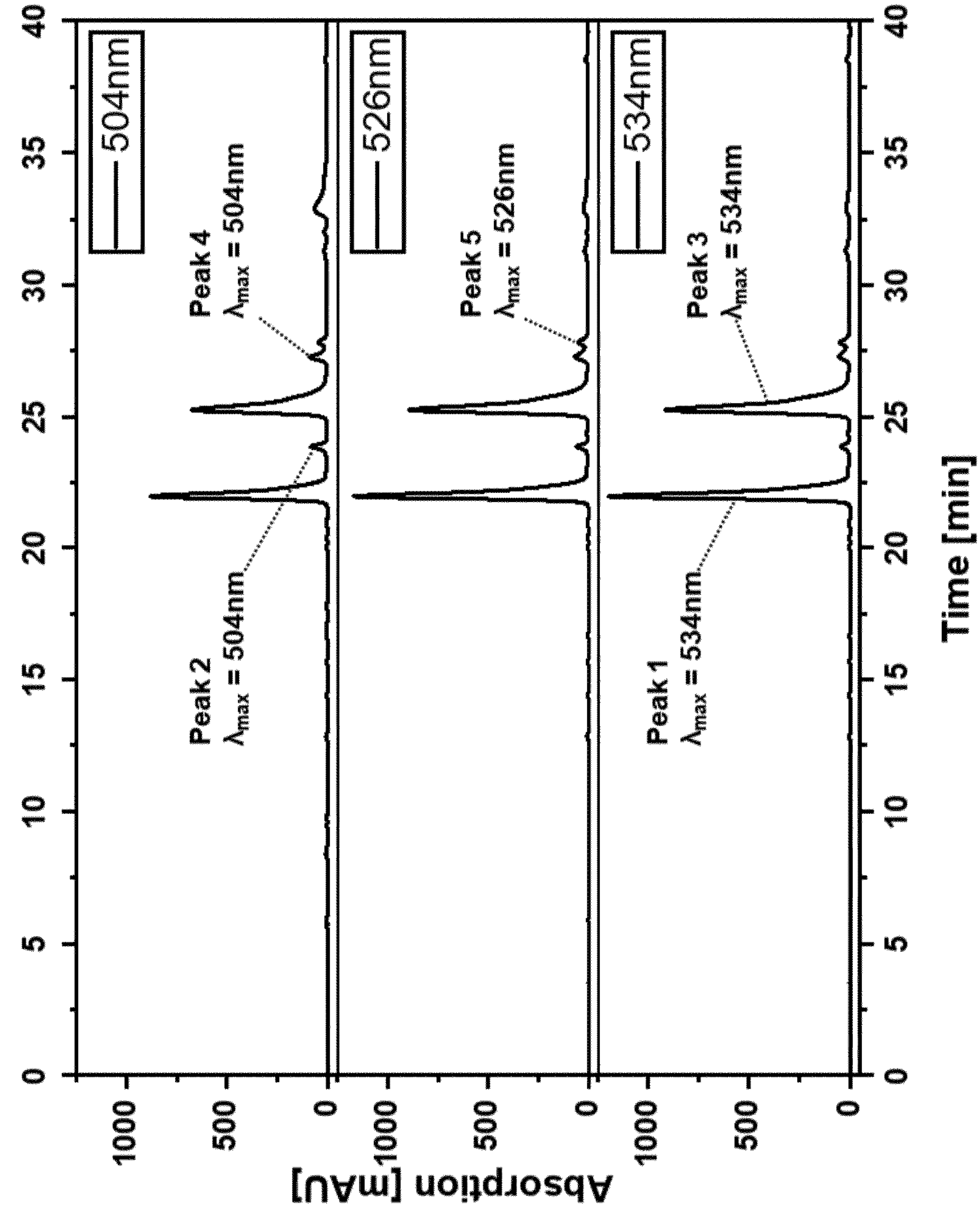
504nm
526nm
534nm
Peak 4
λmax = 504nm
Peak 2
λmax = 504nm
Peak 5
λmax = 526nm
Peak 3
λmax = 534nm
Peak 1
λmax = 534nm
Absorption [mAU]
Time [min]
0
5
10
15
20
25
30
35
40
0
500
1000

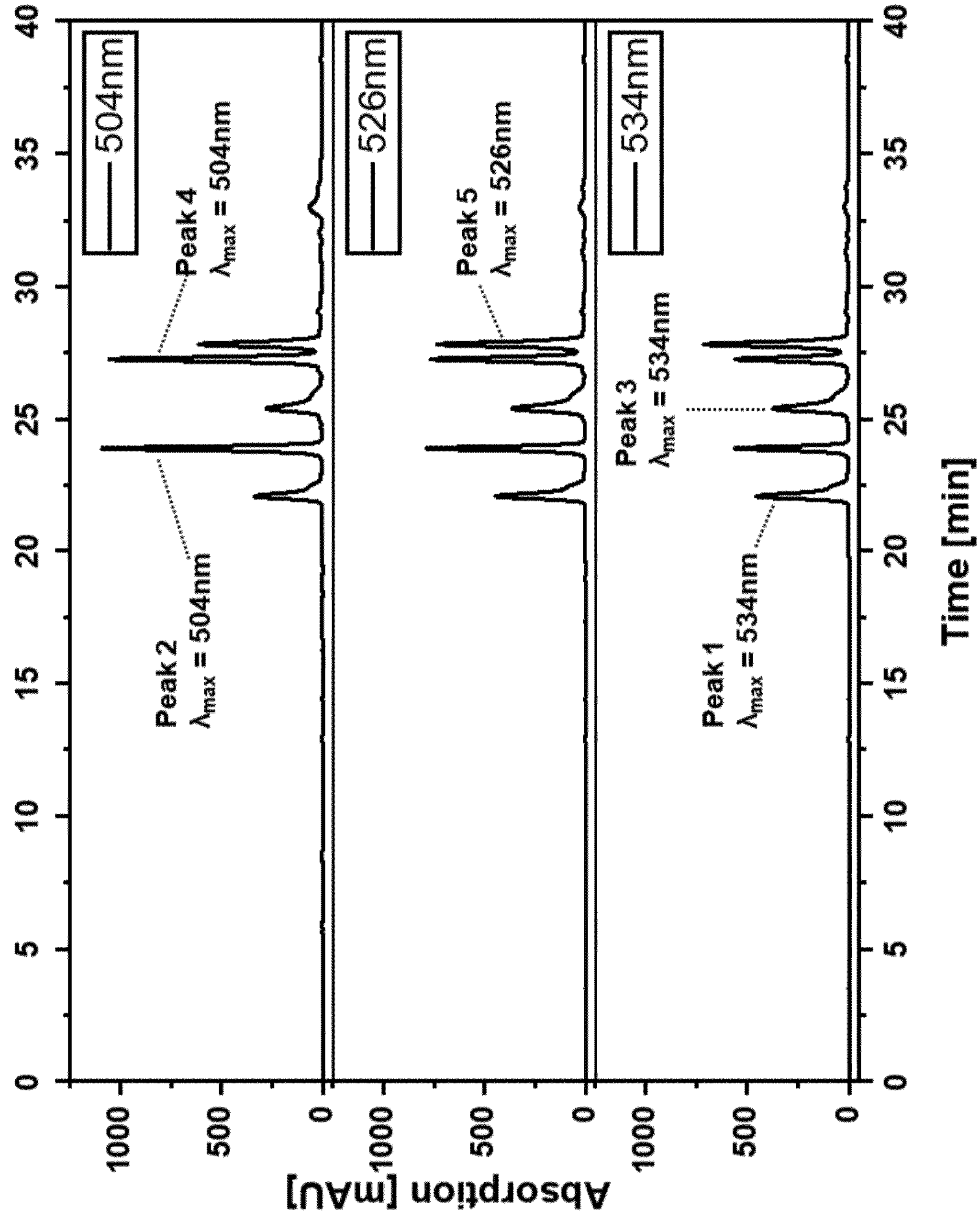
504nm
526nm
534nm
Peak 4
λmax = 504nm
Peak 2
λmax = 504nm
Peak 5
λmax = 526nm
Peak 3
λmax = 534nm
Peak 1
λmax = 534nm
Absorption [mAU]
Time [min]
0
500
1000
0
5
10
15
20
25
30
35
40

Figure 2

Figure 3

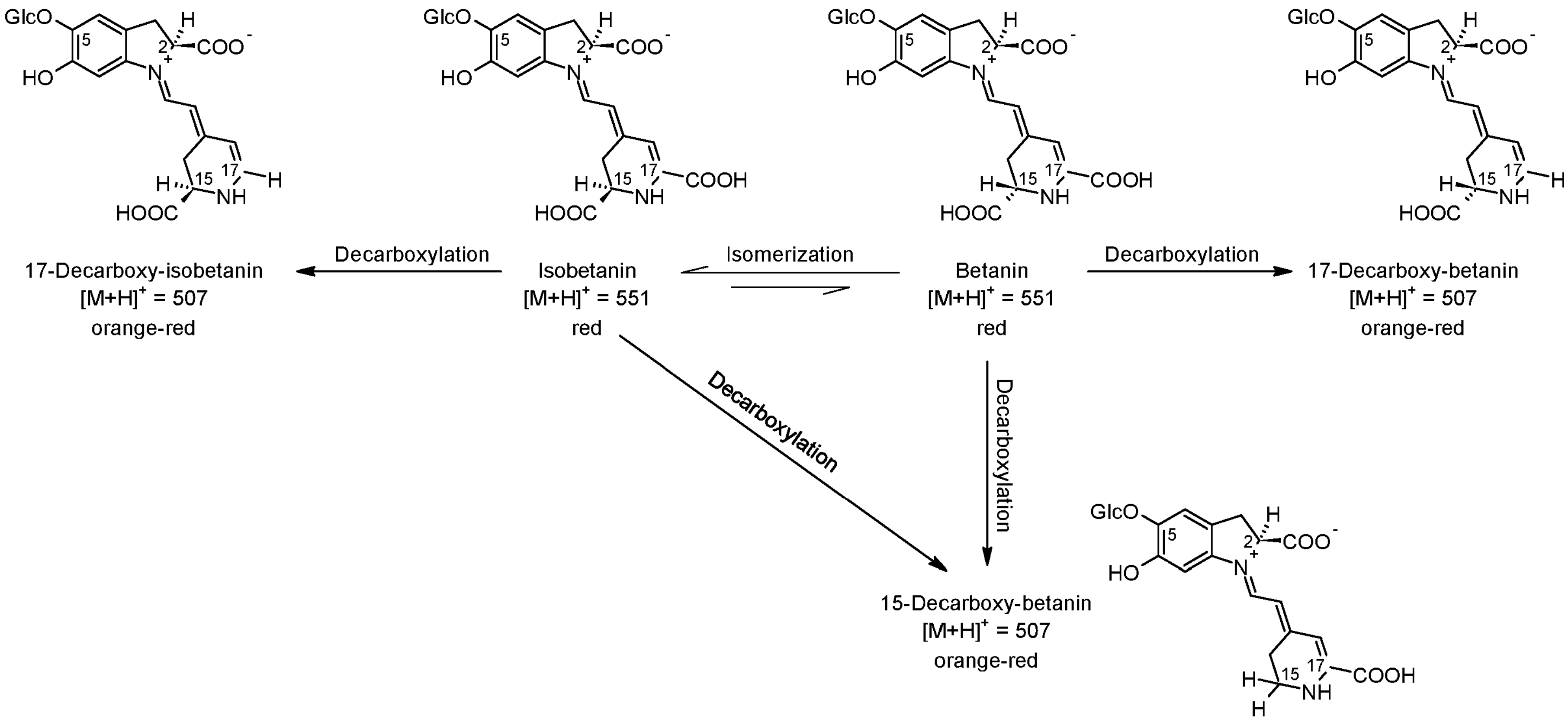


17-Decarboxy-isobetanin
$[M+H]^+ = 507$
orange-red

Isobetanin
$[M+H]^+ = 551$
red

Betanin
$[M+H]^+ = 551$
red

17-Decarboxy-betanin
$[M+H]^+ = 507$
orange-red

15-Decarboxy-betanin
$[M+H]^+ = 507$
orange-red

Figure 4

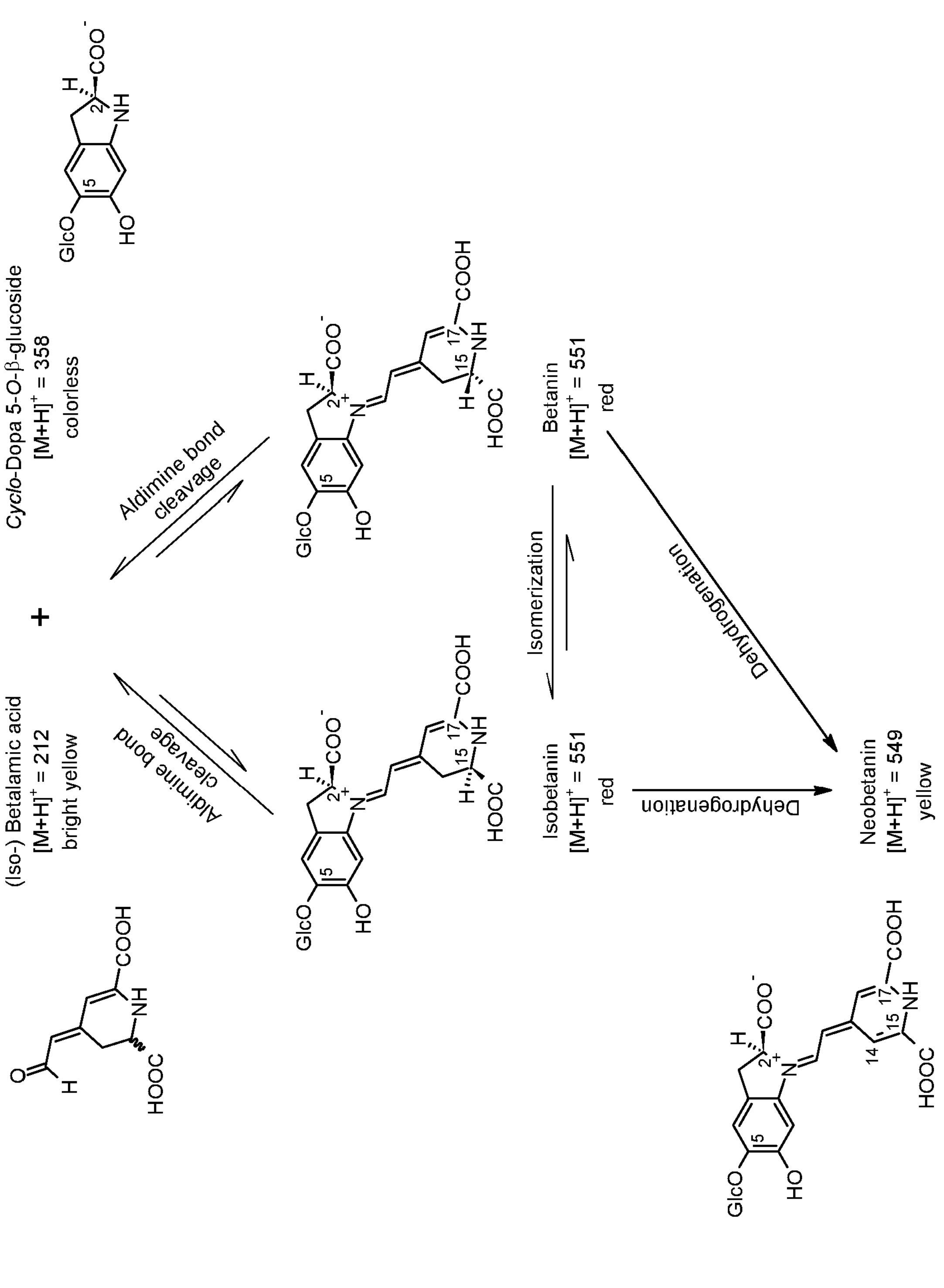
Cyclo-Dopa 5-O-β-glucoside
[M+H]+ = 358
colorless
(Iso-) Betalamic acid
[M+H]+ = 212
bright yellow
Aldimine bond cleavage
Aldimine bond cleavage
Betanin
[M+H]+ = 551
red
Isobetanin
[M+H]+ = 551
red
Isomerization
Dehydrogenation
Dehydrogenation
Neobetanin
[M+H]+ = 549
yellow

Figure 5

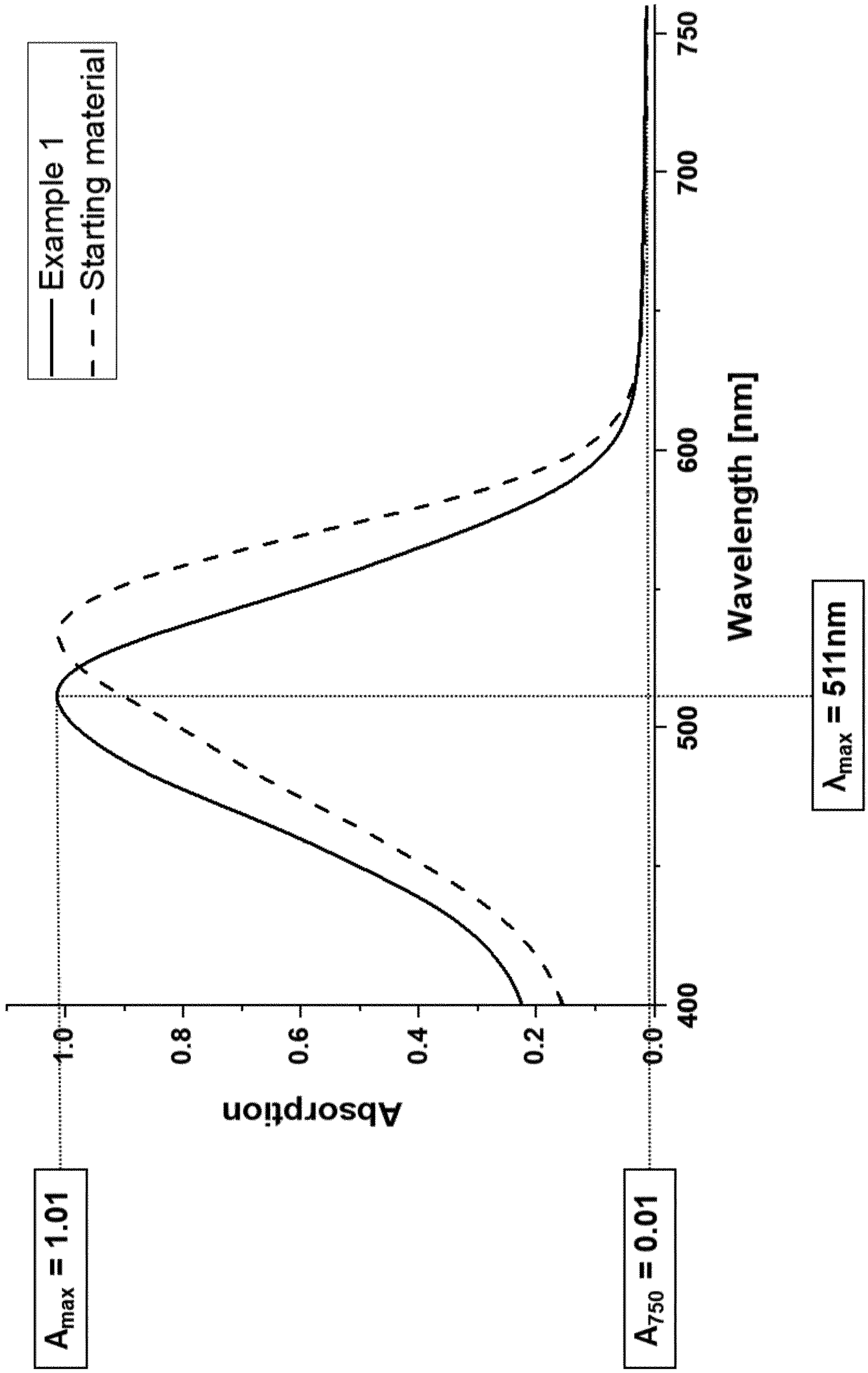
Example 1
Starting material
Absorption
Wavelength [nm]
$A_{max}$ = 1.01
$A_{750}$ = 0.01
$\lambda_{max}$ = 511nm
0.0
0.2
0.4
0.6
0.8
1.0
400
500
600
700
750

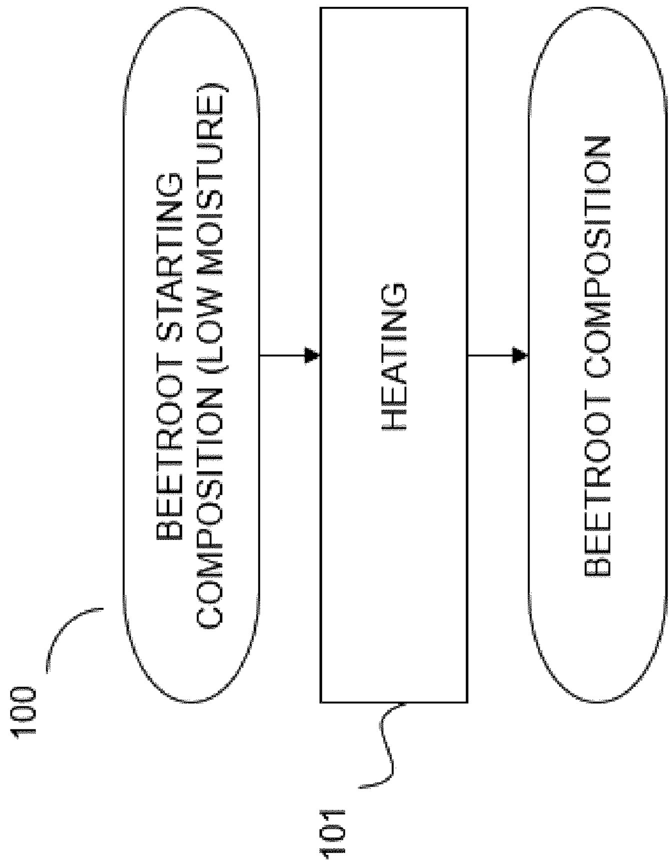
BEETROOT STARTING COMPOSITION (LOW MOISTURE)
HEATING
BEETROOT COMPOSITION
100
101

Figure 6

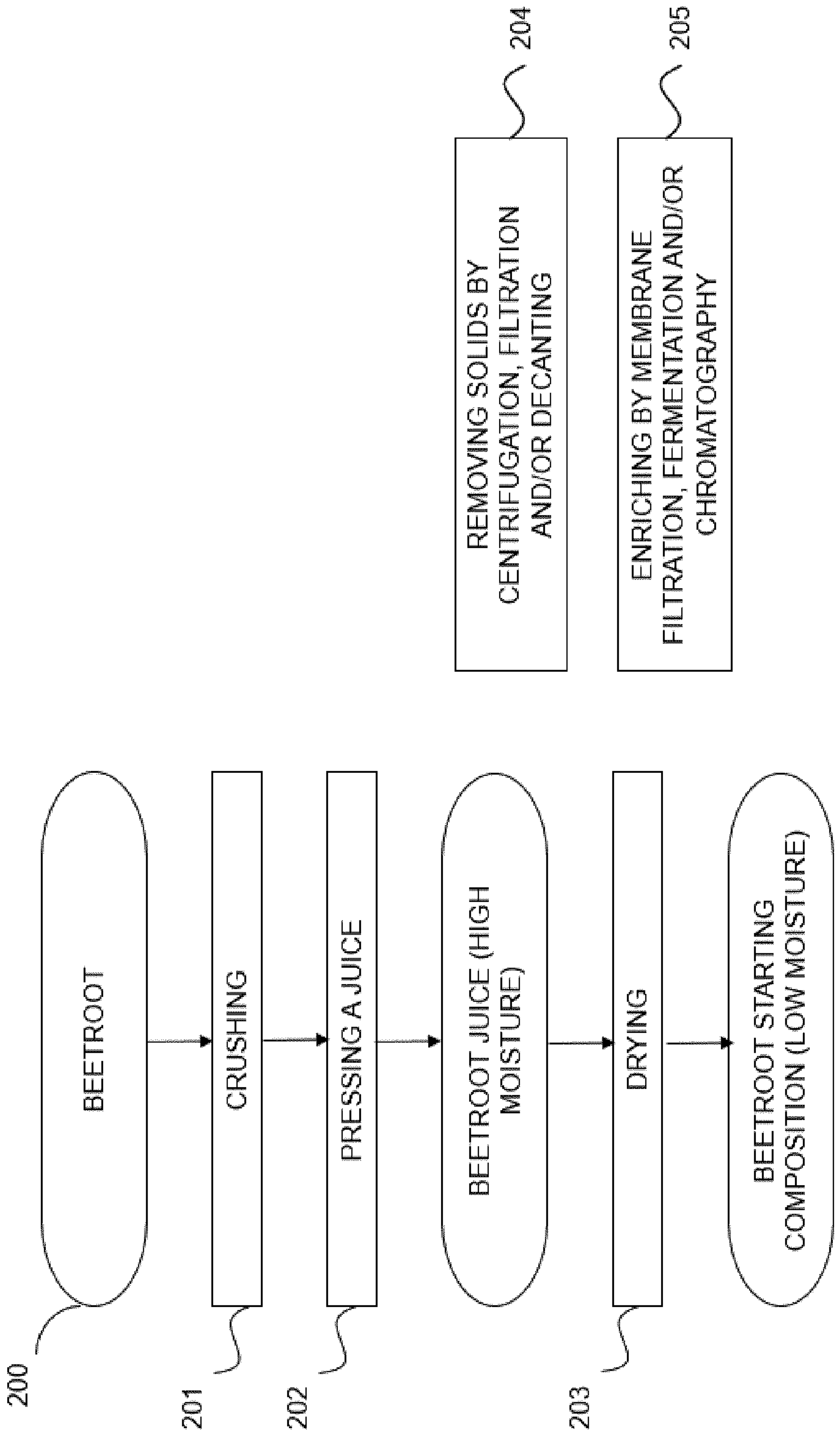
BEETROOT
CRUSHING
PRESSING A JUICE
BEETROOT JUICE (HIGH MOISTURE)
DRYING
BEETROOT STARTING COMPOSITION (LOW MOISTURE)
REMOVING SOLIDS BY CENTRIFUGATION, FILTRATION AND/OR DECANTING
ENRICHING BY MEMBRANE FILTRATION, FERMENTATION AND/OR CHROMATOGRAPHY
200
201
202
203
204
205

Figure 7

Figure 8

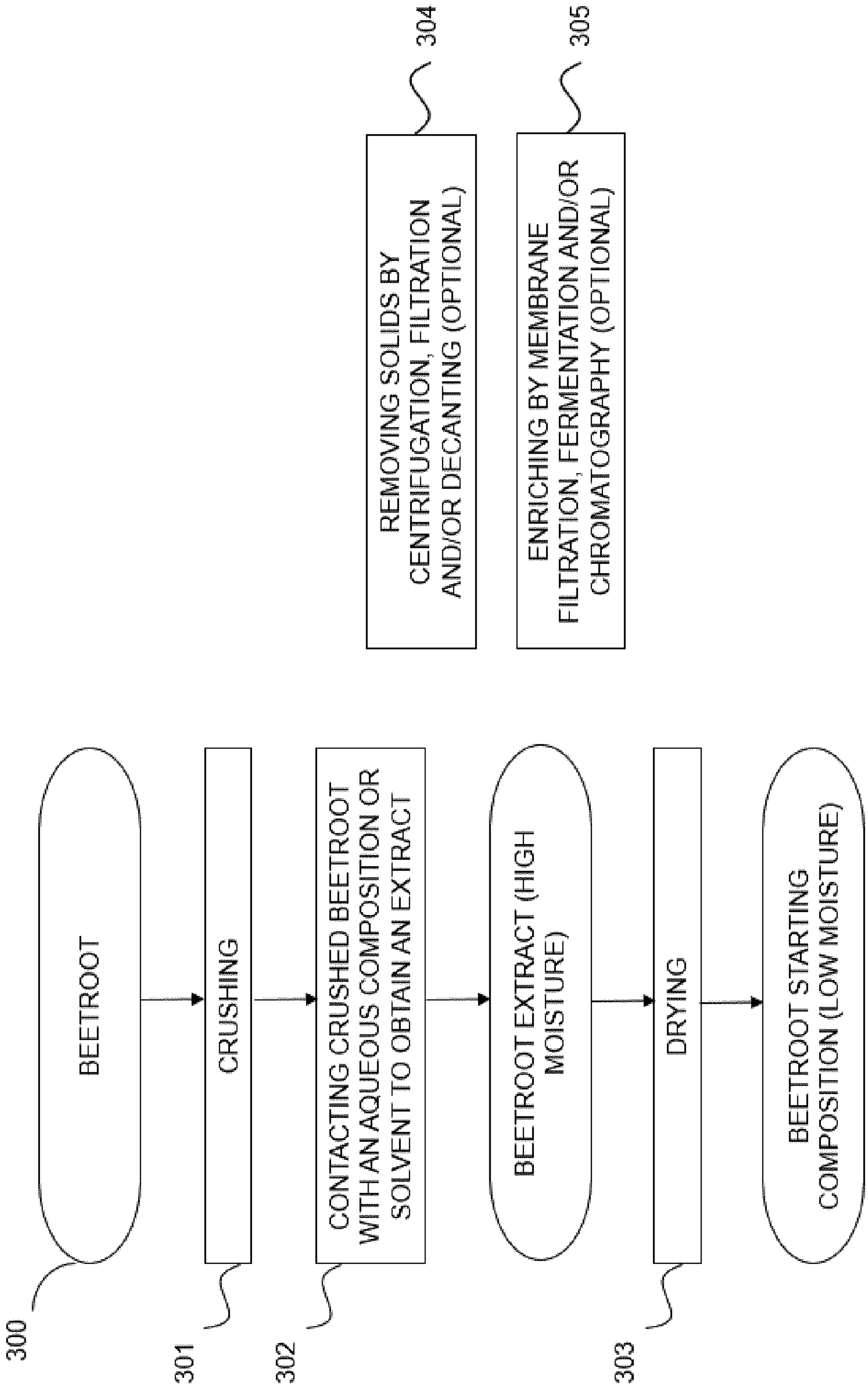
300
BEETROOT
301
CRUSHING
302
CONTACTING CRUSHED BEETROOT WITH AN AQUEOUS COMPOSITION OR SOLVENT TO OBTAIN AN EXTRACT
BEETROOT EXTRACT (HIGH MOISTURE)
303
DRYING
BEETROOT STARTING COMPOSITION (LOW MOISTURE)
304
REMOVING SOLIDS BY CENTRIFUGATION, FILTRATION AND/OR DECANTING (OPTIONAL)
305
ENRICHING BY MEMBRANE FILTRATION, FERMENTATION AND/OR CHROMATOGRAPHY (OPTIONAL)

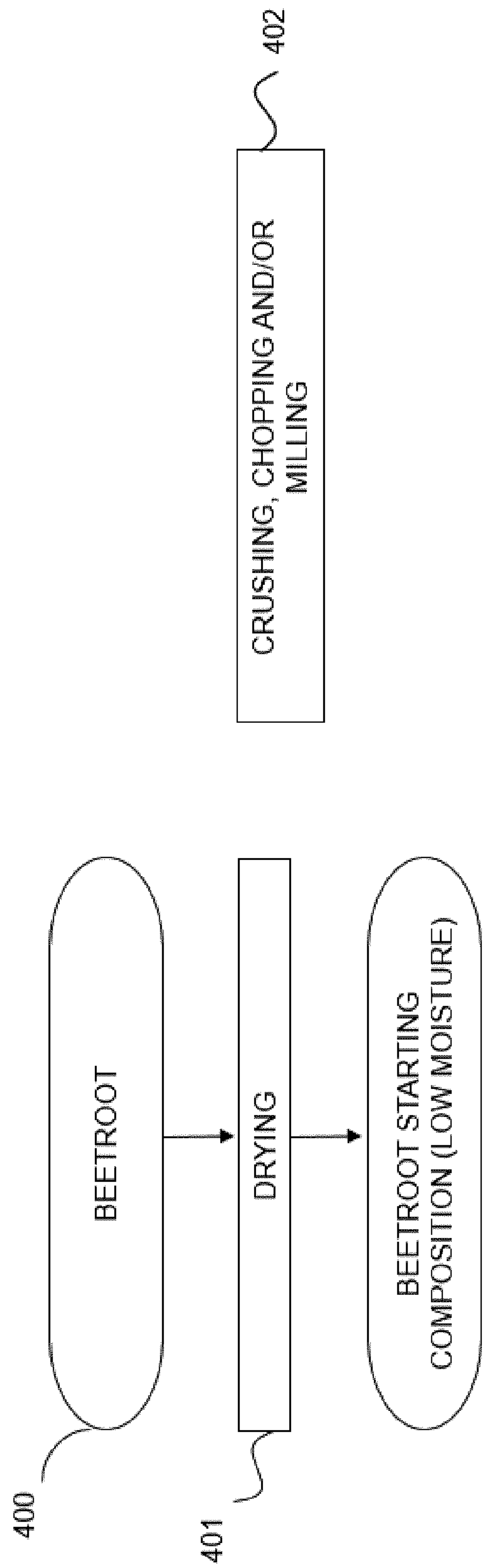

BEETROOT
DRYING
BEETROOT STARTING COMPOSITION (LOW MOISTURE)
CRUSHING, CHOPPING AND/OR MILLING
400
401
402


Figure 9

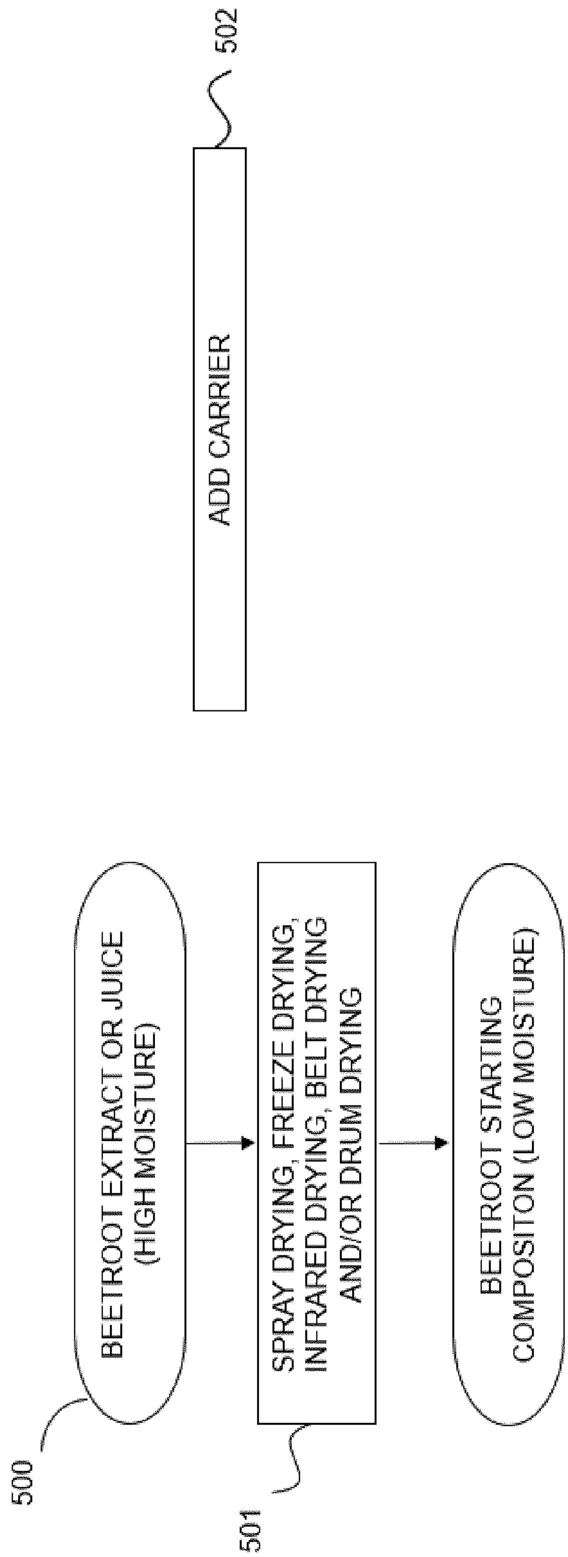
502
ADD CARRIER
500
BEETROOT EXTRACT OR JUICE (HIGH MOISTURE)
501
SPRAY DRYING, FREEZE DRYING, INFRARED DRYING, BELT DRYING AND/OR DRUM DRYING
BEETROOT STARTING COMPOSITON (LOW MOISTURE)

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2393881 A
- WO 9826792 A


### Non-patent literature cited in the description


- **HERBACH, K. M.** ; **STINTZING, F. C.** ; **CARLE, R.** Impact of Thermal Treatment on Color and Pigment Pattern of Red Beet (Beta vulgaris L.) Preparations. *J Food Science*, 2004, vol. 69 (6), C491-C498
- **MIGUEL, MARIA GRAÇA**. Betalains in Some Species of the Amaranthaceae Family: A Review. *Antioxidants (Basel, Switzerland)*, 2018, vol. 7 (4)
- **NILSSON, T.** Studies into the pigments in beetroot (Beta vulgaris L. ssp. vulgaris var. rubra L.). *Lantbrukshogskolans Annaler*, 1970, vol. 36, 179-219